# FASCICULE DE BREVET EUROPEEN

(11) **EP 3 861 897 B1**
(45) Date de publication et mention de la délivrance du brevet: **01.04.2026**
(21) Numéro de dépôt: 21155128.8
(22) Date de dépôt: 04.02.2021
(51) Int. Cl.: A47J 31/44, A47J 31/36

(54) **GROUPE D'INFUSION À GENOUILLÈRE**
BRÜHGRUPPE MIT KNIEHEBEL
INFUSION UNIT WITH KNEE PAD

(30) Priorité: 05.02.2020 FR 2001145
(43) Date de publication de la demande: 11.08.2021
(73) Titulaire: Compagnie Méditerranéenne des Cafés, 06510 Carros (FR)
(72) Inventeur: BLANC, Jean-Pierre, 06510 CARROS (FR); GOUBELY, Aimé, 06510 CARROS (FR); THIBAULT, Bertrand, 06510 CARROS (FR)
(74) Mandataire: Hautier IP

(56) Documents cités:
- US-A1- 2014 023 766
- US-A1- 2014 298 999
- US-A1- 2014 360 379

## Description

### DOMAINE TECHNIQUE DE L'INVENTION

L'invention concerne le domaine des groupes d'infusion. Elle trouve pour application particulièrement avantageuse le domaine des machines de préparation de boisson par infusion, à partir de conditionnement tel qu'une capsule ou une dosette.

### ÉTAT DE LA TECHNIQUE

Il existe plusieurs types de groupes d'infusion pour des machines de préparation de boisson. Certains groupes d'infusions sont plus particulièrement destinés à la préparation de boisson à partir d'un conditionnement, tel qu'une capsule ou une dosette. Ces groupes comprennent de façon générale une chambre d'infusion, formée par deux portions de chambres destinées à se refermer autour ou sur le conditionnement, lors de l'infusion.

Pour cela, les groupes d'infusions comprennent en outre des éléments de réception du conditionnement, ainsi qu'un actionneur agencé de façon à éloigner ou rapprocher les deux portions de chambres. Lors de l'infusion, l'actionneur peut être configuré pour refermer de façon étanche les deux portions formant la chambre d'infusion. L'étanchéité de ces groupes est un facteur important car, lors de l'infusion, l'intérieur de la chambre peut être soumis à des pressions importantes par un fluide chauffé, tel que de l'eau chaude sous pression. Un défaut d'étanchéité peut entraîner des fuites, voire détériorer le groupe d'infusion.

Il est connu de l'état de l'art des groupes d'infusion dans lesquels l'actionneur est un vérin, venant pousser au moins l'une des deux portions de chambre contre l'autre, pour former la chambre d'infusion. L'utilisation d'un vérin permet une fermeture étanche et maîtrisée de la chambre d'infusion, ainsi qu'une bonne résistance à la pression. Toutefois, cela complexifie le groupe d'infusion car le vérin est relié à un circuit hydraulique dédié à son actionnement. En outre, ce circuit hydraulique nécessite une maintenance régulière, notamment pour éviter un entartrage du vérin, pouvant bloquer son actionnement. Les groupes d'infusion comprenant un vérin ont par conséquent des coûts de fabrication et d'entretien plus élevés.

Par ailleurs, il est connu de l'état de la technique, des groupes d'infusion dans lesquels l'actionneur comprend un mécanisme à genouillère, visant à transformer un mouvement de rotation, par exemple d'un levier, en un mouvement de translation de façon à rapprocher les deux portions de chambre pour former la chambre d'infusion. Il s'avère néanmoins difficile de maîtriser l'étanchéité de ce type de mécanisme, notamment après une utilisation répétée du groupe d'infusion. Par ailleurs, lorsque ce type de mécanisme n'est pas complété par un vérin, les forces à appliquer sur l'actionneur permettant d'obtenir l'étanchéité du groupe peuvent être extrêmement variables, et notamment lorsque le dimensionnement des pièces n'est pas maitrisé. L'utilisation du groupe peut être rendue difficile par un utilisateur.

Le document US 2014/0298999 A1 décrit une machine à café dont le groupe comprend un mécanisme à genouillère. Dans ce groupe, un joint muni d'une lèvre est prévu sur la partie fixe de la chambre pour assurer une bonne étanchéité lors de l'infusion. La lèvre est configurée pour venir au contact de la capsule. La fermeture étanche d'une telle chambre d'infusion reste toutefois améliorable.

Un objet de la présente invention est donc de proposer un groupe d'infusion comprenant un mécanisme à genouillère, permettant une fermeture étanche de la chambre d'infusion. Avantageusement, le groupe d'infusion selon l'invention vise à obtenir une fermeture étanche de la chambre d'infusion et accessible à tout utilisateur du groupe, une bonne tenue dans le temps et à limiter les coûts de fabrication et de maintenance du groupe.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, selon un mode de réalisation, la présente invention prévoit un groupe d'infusion pour une machine d'infusion de boisson à partir d'un produit contenu dans un conditionnement selon la revendication 1, le groupe comprenant :
- un bâti de support du groupe ;
- une chambre d'infusion configurée pour recevoir le conditionnement lors de l'infusion, ladite chambre étant définie par au moins une première portion et une deuxième portion de chambre, la deuxième portion de chambre étant mobile relativement au bâti selon un mouvement principal de translation de la deuxième portion, de façon à s'éloigner ou se rapprocher de la première portion afin d'amener la chambre d'infusion dans une configuration respectivement ouverte ou fermée,
- un actionneur agencé pour commander en partie au moins le déplacement de la deuxième portion, l'actionneur comprenant un mécanisme à genouillère, la deuxième portion étant portée au moins en partie par l'actionneur.

Le groupe comprend également un dispositif de réglage, disposé sur le bâti, et configuré pour régler la distance entre les première portion et deuxième portion de chambre lorsque la chambre d'infusion est dans la configuration fermée.

Le dispositif de réglage est configuré pour régler la distance entre les première et deuxième portions de chambre, lorsque la chambre d'infusion est dans la configuration fermée, de façon à rendre la chambre étanche lors de l'infusion. Ce réglage de la distance entre les première et deuxième portions de chambre permet une fermeture de la chambre d'infusion tout en limitant la force à appliquer par l'utilisateur sur l'actionneur. Ainsi, la force de fermeture est suffisamment faible pour être exercée manuellement par tout utilisateur. Le groupe d'infusion présente en outre un encombrement réduit.

Selon un exemple, en configuration fermée, la distance entre les première et deuxième portions de chambre est réglée de façon à amener en contact les première et deuxième portions de chambre, directement ou par l'intermédiaire d'un conditionnement.

Dans le cadre du développement de l'invention, il s'est en effet avéré que les difficultés à maîtriser l'étanchéité d'un groupe d'infusion comprenant un mécanisme à genouillère, proviennent de la difficulté à maîtriser les tolérances de fabrication sur l'ensemble des pièces intervenant dans le mécanisme à genouillère. Ces tolérances de fabrication peuvent notamment impacter la longueur de course du mécanisme à genouillère. Dès lors, lorsque la chambre d'infusion est amenée dans une configuration fermée, l'étanchéité de la chambre d'infusion n'est pas garantie. Le réglage de la distance entre les première et deuxième portions de chambre, lorsque la chambre d'infusion est dans la configuration fermée, permet de pallier une variation dans la longueur de course du mécanisme à genouillère et par voie de conséquence de rendre la chambre étanche lors de l'infusion.

Par ailleurs, le groupe d'infusion selon l'invention prévoit que le dispositif de réglage soit porté par le bâti. Cela permet de conférer un référentiel fixe à ce dispositif de réglage. Le réglage de la distance entre les deux portions de chambre est alors plus précis. En effet, si le dispositif de réglage avait été porté par des pièces mobiles par rapport au bâti, il n'y aurait pas eu de référentiel fixe et la précision du réglage en aurait été amoindrie. L'invention permet ainsi d'améliorer la précision de la fermeture du groupe. Elle résout donc problématique consistant à améliorer la fiabilité et la sécurité du groupe
Par ailleurs, le fait que le dispositif de réglage soit monté sur le bâti permet de rendre ce dernier plus facilement accessible ou manipulable par un utilisateur, lors de la fabrication du groupe ou lors de sa maintenance. En effet, si le dispositif de réglage avait été porté par des pièces mobiles par rapport au bâti, le réglage du dispositif aurait été plus complexe pour l'utilisateur. Par ailleurs, le mouvement relatif des différentes pièces portant le dispositif de réglage aurait probablement conduit à un déréglage involontaire du réglage effectué. La fiabilité de la fermeture du groupe en aurait été détériorée. L'invention proposée permet ainsi de renforcer la sécurité et la fiabilité des groupes d'infusion existants, présentant un mécanisme à genouillère. Selon un exemple, le groupe comprend en outre un système de compensation d'étanchéité. Le système de compensation d'étanchéité peut comprendre au moins un organe élastique configuré pour exercer sur au moins l'une parmi la première portion et la deuxième portion de chambre une force de compression tendant à serrer mutuellement la première portion et une deuxième portion dans la configuration fermée de la chambre d'infusion. Le système de compensation est ainsi configuré pour maintenir l'étanchéité de la chambre d'infusion malgré une éventuelle usure des pièces du groupe. Ainsi le système de compensation permet de limiter l'impact de cette usure, et ainsi garantir l'étanchéité du groupe tout au long de son utilisation. La durée de vie du groupe d'infusion est ainsi encore augmentée.

Selon un exemple, l'au moins un organe élastique est configuré pour être comprimé élastiquement uniquement dans la configuration fermée de la chambre d'infusion.

Selon un exemple, l'au moins un organe élastique est configuré pour ne pas être comprimé élastiquement dans la configuration ouverte de la chambre d'infusion et est configuré pour être comprimé élastiquement dans la configuration fermée de la chambre d'infusion. L'au moins un organe élastique comprend au moins l'un parmi un ressort de compression et au moins une rondelle de compression. Selon un exemple, l'au moins un organe élastique, de préférence une pluralité de rondelles de compression, est positionné entre le bâti et la première portion de chambre.

Selon un exemple, l'au moins un organe élastique est configuré pour être comprimé élastiquement dans la configuration ouverte de la chambre d'infusion et dans la configuration fermée de la chambre d'infusion, l'au moins un organe élastique comprenant au moins l'un parmi un ressort de compression et au moins une rondelle de compression.

Un deuxième aspect de la présente invention concerne un procédé de réglage d'un groupe d'infusion selon le premier aspect de l'invention, comprenant au moins les étapes suivantes :
- actionner le mécanisme à genouillère de façon à passer la chambre d'infusion en configuration fermée ;
- agir sur le dispositif de réglage afin de régler la distance entre les première portion et deuxième portion de chambre lorsque la chambre d'infusion est dans la configuration fermée.

Le réglage de la distance entre les première et deuxième portions de chambre, lorsque la chambre d'infusion est dans la configuration fermée, peut ainsi être effectué, par exemple lors de la fabrication du groupe d'infusion ou lors du changement d'une pièce du groupe, en particulier lors du changement d'une pièce intervenant dans le mécanisme de fermeture à genouillère du groupe. La distance entre les première et deuxième portions de chambre peut ainsi être réglée pour chaque longueur de course du mécanisme à genouillère, pour une pluralité de groupes d'infusion. Par ailleurs, ce procédé de réglage peut être mis en œuvre lors de la maintenance du groupe. Typiquement, après un certain nombre de cycles ou une certaine durée d'utilisation du groupe, on peut procéder à un réglage du groupe afin de compenser l'usure des pièces. En effet, de manière inattendue, il s'est avéré que l'usure des pièces, même faible, peut entrainer des conséquences notables sur la fermeture du groupe. Typiquement, un groupe qui présente une chambre étanche en début de vie peut devenir non étanche après un grand nombre de cycles, du fait de l'usure des pièces.

Selon un troisième aspect, l'invention concerne un procédé de fabrication d'un groupe d'infusion, comprenant au moins :
- fournir un groupe d'infusion selon le premier aspect de l'invention, et
- mettre en œuvre le un procédé de réglage du groupe d'infusion selon le deuxième aspect de l'invention.

Ce procédé de réglage permet ainsi de limiter, voire de s'affranchir, des tolérances de fabrication du mécanisme à genouillère. Ainsi, les coûts de production du groupe d'infusion selon le premier aspect de l'invention, sont avantageusement minimisés.

Selon un quatrième aspect, l'invention concerne une machine de préparation de boisson par infusion, à partir d'un produit contenu dans un conditionnement, comprenant un groupe d'infusion selon le premier aspect de l'invention, ainsi qu'au moins une chaudière et une pompe, la chaudière et la pompe étant configurées pour alimenter la chambre d'infusion avec un fluide chauffé et sous pression.

Selon un cinquième aspect, l'invention concerne un ensemble comprenant une machine de préparation de boisson selon le troisième aspect de l'invention et au moins un conditionnement. Ladite machine de préparation de boisson par infusion, ainsi que ledit ensemble, comprenant le groupe d'infusion selon le premier aspect de l'invention, ladite machine et ledit ensemble comprennent les caractéristiques et les avantages du groupe d'infusion selon le premier aspect de l'invention.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue d'ensemble en perspective du groupe d'infusion selon un mode de réalisation de l'invention.
La figure 2 représente une vue latérale du groupe d'infusion illustré en figure 1, lorsque la chambre d'infusion est en configuration ouverte.
La figure 3 représente une vue latérale du groupe d'infusion illustré en figure 1, lorsque la chambre d'infusion est en configuration fermée.
La figure 4A représente une vue latérale du groupe d'infusion illustré en figure 1, lorsque la chambre d'infusion est en configuration ouverte. Sur cette vue l'une des platines n'est pas représentée pour faciliter la compréhension.
La figure 4B représente une vue latérale en coupe du groupe d'infusion illustré en figure 1, lorsque la chambre d'infusion est en configuration ouverte.
La figure 5A représente une vue latérale du groupe d'infusion illustré en figure 1, lorsque la chambre d'infusion est en configuration fermée. Sur cette vue l'une des platines n'est pas représentée pour faciliter la compréhension.
La figure 5B représente une vue latérale en coupe du groupe d'infusion illustré en figure 1, lorsque la chambre d'infusion est en configuration fermée.
La figure 6 représente une vue du dispositif de réglage selon un mode de réalisation de l'invention.
La figure 7 représente une vue de la coopération entre le dispositif de réglage et le bâti, selon un mode de réalisation de l'invention.
La figure 8 représente une vue en coupe latérale des première et deuxième portions de la chambre d'infusion, en configuration ouverte, selon un mode de réalisation de l'invention.
La figure 9 représente une vue agrandie de la figure 8.
La figure 10 représente une vue latérale en coupe d'une partie des première et deuxième portions de la chambre d'infusion, en configuration fermée, selon un mode de réalisation de l'invention.
La figure 11 représente une vue latérale en coupe des première et deuxième portions de la chambre d'infusion, en configuration fermée, selon un mode de réalisation de l'invention.
La figure 12 représente une vue en coupe en perspective des première et deuxième portions de la chambre d'infusion illustrées en figure 11.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles du groupe d'infusion selon le premier aspect de l'invention, qui peuvent éventuellement être utilisées en association ou alternativement.

Selon un exemple, le mécanisme à genouillère et la deuxième portion sont reliées de sorte que l'actionneur du mécanisme à genouillère entraîne le déplacement de la deuxième portion par rapport au bâti. Selon un exemple, le dispositif de réglage est configuré pour régler la distance entre les première portion et deuxième portion de chambre sans faire intervenir de composante élastique, et plus particulièrement de composante élastique additionnelle au système de compensation d'étanchéité. Selon un exemple, le dispositif de réglage est exempt d'un élément élastique, par exemple de joint. Selon un exemple, le dispositif de réglage n'est pas un joint.

Le dispositif de réglage est configuré pour déplacer au moins l'une parmi la première portion et la deuxième portion de chambre par rapport au bâti, la deuxième portion étant déplacée par le dispositif de réglage directement ou par l'intermédiaire d'un déplacement du mécanisme à genouillère par le dispositif de réglage. Ainsi, la distance entre les première portion et deuxième portion de chambre peut être réglée, lorsque la chambre d'infusion est dans la configuration fermée. Plus particulièrement, le déplacement du mécanisme à genouillère par rapport au bâti permet d'ajuster la position de la deuxième portion de chambre mobile pour régler la distance entre les première et deuxième portions de chambre, en configuration fermée de la chambre d'infusion. De façon alternative ou complémentaire, l'ajustement de la position de la première portion de chambre permet de régler la distance entre les première et deuxième portions de chambre, en configuration fermée de la chambre d'infusion.

Selon un exemple, le dispositif de réglage peut comprendre au moins une vis de réglage montée en rotation sur le bâti, et configurée pour déplacer au moins l'une parmi la première portion et la deuxième portion de chambre lorsque ladite vis est entraînée en rotation. Ainsi, le réglage de la distance entre les première et deuxième portions de chambre est effectué de façon mécanique, ce qui permet d'obtenir un réglage plus stable, et ainsi d'améliorer la fiabilité et la sécurité du groupe. En outre, la force de fermeture à appliquer sur l'actionneur, tel qu'un levier, peut être ainsi être réglée à une force déterminée de sorte que tout utilisateur puisse actionner manuellement le vérin. Selon un exemple, la vis de réglage peut être montée en rotation sur le bâti, et configurée pour déplacer au moins l'un parmi le mécanisme à genouillère et la première portion de chambre par rapport au bâti.

Selon un exemple, le mécanisme à genouillère peut comprendre un levier actionnable manuellement par l'utilisateur ou solidaire d'un motoréducteur, et un organe d'entrainement, solidaire du levier. L'organe d'entraînement peut être monté en rotation par rapport au bâti autour d'une direction d'entraînement. Le mécanisme à genouillère peut en outre comprendre au moins une bielle, et de préférence une unique bielle, articulée en rotation par rapport à l'organe d'entrainement, autour d'un premier axe de rotation. La bielle peut en outre être reliée à la deuxième portion de chambre mobile, de préférence directement. Plus préférentiellement, la bielle est articulée en rotation avec la deuxième portion de chambre mobile, autour d'un deuxième axe de rotation. La bielle peut être configurée pour entraîner ladite deuxième portion dans un mouvement principal de translation.

Selon un exemple, le dispositif de réglage peut être configuré pour déplacer l'organe d'entraînement, selon une direction parallèle à un mouvement principal de translation de la deuxième portion de chambre. La longueur de course du mécanisme à genouillère est dépendant des tolérances de fabrication des éléments composant ce mécanisme. Le déplacement de l'organe d'entraînement, permet de décaler l'ensemble du mécanisme à genouillère, et ainsi de régler la distance entre les première et deuxième portions de chambre lorsque la chambre d'infusion est dans la configuration fermée. Plus particulièrement, en configuration fermée, ladite distance est réglée de façon à être sensiblement nulle. L'étanchéité de chambres d'infusion de groupes d'infusion présentant des variations dans la longueur de course du mécanisme à genouillère peut ainsi être améliorée.

Selon un exemple, le dispositif de réglage peut comprendre au moins une vis de réglage montée en rotation sur le bâti, et configurée pour déplacer l'organe d'entraînement lorsque la vis de réglage est entraînée en rotation. Par l'entraînement en rotation de ladite vis, son degré de vissage permet ainsi d'ajuster précisément la position de l'organe d'entraînement.

Selon un exemple, la vis de réglage peut être en appui sur l'un parmi l'organe d'entrainement et un arbre sur lequel l'organe d'entrainement est monté en rotation autour de la direction d'entrainement, de façon à déplacer l'arbre d'entraînement selon un mouvement de translation dont la direction est parallèle au mouvement principal de translation de la deuxième portion de chambre. Au moins une portion dudit arbre peut en outre être disposée dans un oblong du bâti, cet oblong s'étendant selon une direction parallèle au mouvement principal de translation relative de la deuxième portion de chambre. Selon cet exemple, l'organe d'entraînement étant monté en rotation par rapport au bâti autour de l'arbre d'entraînement, le déplacement de cet arbre permet par voie de conséquence le déplacement de l'organe d'entraînement. De préférence, les deux extrémités de l'arbre d'entraînement sont chacune disposées dans un oblong du bâti.

Selon un mode de réalisation, l'arbre d'entraînement est fixe par rapport au bâti. Ainsi lorsque la vis de réglage est en appui sur cet arbre, le risque de dévissement de la vis de réglage est limité. La tenue dans le temps du réglage de la distance entre les première et deuxième portions de chambre est ainsi améliorée. Par ailleurs, le dispositif de réglage proposé est relativement simple de conception de fabrication et implique peu de pièces. Il présente une robustesse élevée. Il permet d'améliorer encore la fiabilité du groupe d'infusion et la sécurité de la machine de préparation de boisson.

Selon un exemple, le dispositif de réglage peut être configuré pour déplacer la première portion de chambre par rapport au bâti, selon une direction parallèle au mouvement principal de translation de la deuxième portion de chambre. Le déplacement de la première portion de chambre, selon une direction parallèle à un mouvement principal de translation relative de la deuxième portion de chambre, permet de décaler la première portion de chambre par rapport au bâti et par voie de conséquence par rapport à l'ensemble du mécanisme à genouillère, le mécanisme pouvant être relié à la deuxième portion de chambre. La distance entre les première et deuxième portions de chambre peut ainsi être réglée lorsque la chambre d'infusion est dans la configuration fermée. Plus particulièrement, en configuration fermée, ladite distance est réglée de façon à être sensiblement nulle. L'étanchéité des chambres d'infusion de groupes d'infusion présentant des variations dans la longueur de course du mécanisme à genouillère peut ainsi être améliorée.

Selon un exemple, le dispositif de réglage peut comprendre au moins une vis de réglage montée en rotation sur le bâti, et configurée pour déplacer la première portion de chambre lorsque la vis de réglage est entraînée en rotation, selon un mouvement de translation dont la direction est parallèle à un mouvement principal de translation de la deuxième portion de chambre. Par l'entraînement en rotation de la vis de réglage, son degré de vissage permet d'ajuster précisément la position de la première portion de chambre, ainsi que la force de fermeture à appliquer sur l'actionneur, par exemple un levier, pour fermer la chambre d'infusion. Selon un exemple, le mécanisme à genouillère comprenant un levier actionnable manuellement par l'utilisateur ou solidaire d'un motoréducteur, ledit levier peut être stoppé en fin de course du mécanisme à genouillère par au moins une butée disposée sur le mécanisme à genouillère, lors du passage de la configuration ouverte à la configuration fermée de la chambre d'infusion. La configuration fermée de la chambre d'infusion peut ainsi être plus précisément définie par la mise en butée du levier. Le réglage de la distance entre les première et deuxième portions de chambre peut par conséquent être effectué de façon plus fiable.

Selon un exemple, le levier peut être solidaire d'un organe d'entrainement, et l'organe d'entrainement peut être monté en rotation par rapport au bâti autour d'une direction d'entraînement, l'organe d'entrainement pouvant en outre être monté en rotation par rapport à une bielle autour d'un axe de rotation. Ladite au moins une butée peut être disposée sur la bielle de façon à venir en appui sur au moins une portion du levier, lorsque la chambre d'infusion est en configuration fermée. Selon cet exemple, le levier n'est pas actionné au-delà de la fin de course prévue du mécanisme à genouillère. L'actionnement du levier est ainsi particulièrement simple puisqu'en amenant le levier et la butée en contact, l'utilisateur sait que la fin de de course est atteinte. Le mécanisme à genouillère selon cette caractéristique est ainsi plus robuste. En outre, la bielle peut être reliée à la deuxième portion de chambre mobile, et configurée pour entraîner ladite deuxième portion dans un mouvement principal de translation. Selon cet exemple, la mise en butée du levier minimise, voire évite, un éloignement de la deuxième portion de chambre selon un mouvement principal de translation de la deuxième portion, lors du passage de la configuration ouverte à la configuration fermée de la chambre d'infusion. La mise en butée du levier concoure donc à l'étanchéité du groupe d'infusion lors de son utilisation.

Selon un exemple, le dispositif de réglage peut en outre être configuré pour être réglé manuellement ou par l'intermédiaire d'un outil actionné manuellement. Le réglage de la distance entre les première et deuxième portions de chambre peut ainsi être aisément effectué lors de la fabrication du groupe d'infusion et/ou par un utilisateur, sans nécessairement recourir à un outillage particulier.

Selon un exemple, la première portion et la deuxième portion de chambre comprennent chacune un relief annulaire, ces reliefs étant disposés en vis-à-vis l'un de l'autre lorsque la chambre d'infusion est en configuration fermée. L'un des reliefs annulaires peut présenter, en projection sur un plan perpendiculaire à une direction parallèle au mouvement principal de translation de la deuxième portion, une surface inférieure à 0,7 et de préférence à 0,1 fois la surface de l'autre des reliefs annulaires. La réduction de l'interface de contact entre les première et deuxième portions de chambre permet de concentrer, sur cette interface, la force générée lors de la fermeture de la chambre d'infusion. Ainsi, l'étanchéité de la chambre d'infusion est encore améliorée.

Selon un exemple, chacune des première et deuxième portions de chambre peut comprendre un relief annulaire, ces reliefs annulaires présentant une dureté sensiblement identique. La force de fermeture, générée par le mécanisme à genouillère, est ainsi transférée depuis la deuxième portion de chambre à la première portion de chambre, en passant par l'interface de contact entre les reliefs annulaires portés par les première portion et deuxième portion.

Selon un exemple, le bâti peut comprendre au moins deux platines s'étendant principalement selon des directions parallèles au mouvement principal de translation de la deuxième portion, le bâti présentant une forme générale de « U » dont les branches sont chacune formées par une platine. Le mécanisme à genouillère est disposé entre les deux platines, les deux platines étant liées entre elles par l'intermédiaire d'au moins un élément de liaison, l'élément de liaison portant la vis de réglage.

Selon un exemple, le groupe peut en outre être configuré de sorte que la deuxième portion présente par rapport au bâti un unique degré de liberté de mouvement, cet unique degré de liberté étant une translation selon une direction parallèle au mouvement principal de translation de la deuxième portion de chambre. Ainsi, la deuxième portion n'est pas articulée en rotation par rapport au bâti.

Selon un exemple, l'au moins un organe élastique du système de compensation d'étanchéité peut être positionné entre le bâti et la première portion de chambre. De préférence, l'organe élastique peut comprendre une pluralité de rondelles de compression.

Selon un exemple, le groupe peut comprendre en outre un dispositif d'étanchéité déformable élastiquement et disposé sur au moins une parmi la première portion et une deuxième portion de chambre, de sorte que le dispositif d'étanchéité est disposé au contact de chacune des première et deuxième portions de chambre, dans la configuration fermée de la chambre d'infusion.

Selon un exemple, les première portion et deuxième portion de chambre comprennent chacune un relief annulaire disposés en vis-à-vis lorsque la chambre d'infusion est en configuration fermée, et au moins l'une des première portion et deuxième portion de chambre comprend en outre un relief annulaire additionnel déformable élastiquement.

Selon un exemple, au moins l'une des première portion et deuxième portion de chambre comprend en outre un relief annulaire additionnel d'une dureté inférieure à la dureté des reliefs annulaires.

Le procédé de fabrication selon le deuxième aspect de l'invention peut en outre présenter des caractéristiques optionnelles suivantes, pouvant éventuellement être utilisées en association ou alternativement.

Selon un exemple, le dispositif de réglage comprenant au moins une vis de réglage montée en rotation sur le bâti, l'étape d'action sur le dispositif de réglage peut comprendre une étape de vissage de ladite vis de façon à déplacer au moins l'un parmi le mécanisme à genouillère et la première portion de chambre par rapport au bâti.

Selon un exemple, l'étape d'action sur le dispositif de réglage peut être effectuée manuellement ou par l'intermédiaire d'un outil actionné manuellement.

Il est précisé que dans le cadre de la présente invention, le terme « mécanisme à genouillère » désigne un mécanisme configuré de façon à transformer un mouvement d'une rotation autour d'un axe fixe en rotation par rapport à un bâti, en un mouvement de translation selon une direction perpendiculaire audit axe. Lors de la conversion de la rotation en translation, les pièces intervenant dans le mécanisme à genouillère sont configurées de sorte qu'au moins une partie du mécanisme s'étende ou se contracte en translation selon une direction principale perpendiculaire audit axe.

Le mot « conditionnement » correspond à l'emballage du produit à partir duquel la boisson est préparée. Dans le cadre de la présente invention, un conditionnement peut par exemple correspondre à ce que l'on désigne communément « capsule » ou « dosette ». Le conditionnement peut être en métal, en plastique, en papier, en carton, ou d'un mélange de ces matières. De préférence, le conditionnement est en papier.

On entend par « configuration ouverte », une configuration de la chambre d'infusion où les première et deuxième portions sont éloignées l'une de l'autre, d'une distance permettant le passage d'un conditionnement entre les première et deuxième portions. En configuration ouverte, l'extension en translation du mécanisme à genouillère est préférentiellement minimale. On entend par « configuration fermée », une configuration de la chambre d'infusion où les premières et deuxièmes portions sont au plus proche, voire en contact, directement ou par l'intermédiaire du conditionnement. En configuration fermée, l'extension en translation du mécanisme à genouillère est préférentiellement maximale.

On entend par « interface de contact », l'interface entre la surface de chacune des première et deuxième portions de chambre, ces surfaces de contact étant destinées à être en contact, directement ou par le biais d'au moins une partie du conditionnement, lorsque la chambre d'infusion est en configuration fermée. La force de fermeture de la chambre passe entièrement ou tout au moins à 90% par cette interface.

La distance entre les première et deuxième portions de chambre, désigne la distance séparant les surfaces de contact des première et deuxième portions de chambre. Lorsque la chambre d'infusion est dans la configuration fermée, cette distance peut être mesurée dans une configuration où les premières et deuxièmes portions sont au plus proche. Lorsque les surfaces de contact des première et deuxième portions de chambre sont directement en contact, cette distance est nulle. Lorsque les surfaces de contact des première et deuxième portions de chambre sont en contact par le biais d'un conditionnement, cette distance est sensiblement égale à l'épaisseur du conditionnement séparant les première et deuxième portions de chambre.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

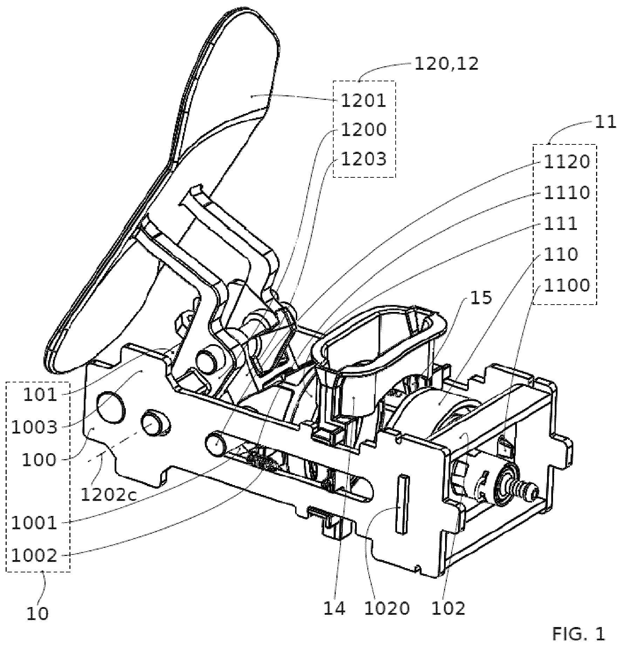

Le groupe d'infusion selon un mode de réalisation exemplatif de l'invention est maintenant décrit en référence aux figures 1 à 12.

Le groupe 1 d'infusion comprend un bâti 10 de support du groupe 1, une chambre d'infusion 11 comprenant une première portion 110 et une deuxième portion 111 de chambre, ainsi qu'un actionneur 12.

Le bâti est tout d'abord décrit en référence à la figure 1. Selon l'exemple illustré en figure 1, le bâti 10 comprend deux platines 100, désignées de façon par le terme joues, disposées de façon à pouvoir supporter une partie, voire l'ensemble, des éléments du groupe 1. Les platines 100 peuvent être configurées de façon à maintenir l'agencement des éléments du groupe 1 lors de son utilisation et à maintenir le groupe 1 dans une machine de préparation de boisson. Pour cela, les platines 100 peuvent être disposées en vis-à-vis et s'étendre le long du groupe 1 d'infusion. Les platines 100 peuvent présenter au moins une, et de préférence une pluralité de formes 1003, par exemple des portions en saillie, permettant le positionnement et le maintien du groupe 1 dans la machine de préparation de boisson. Le bâti peut comprendre un élément de liaison 101, de façon à joindre les deux platines 100 du bâti afin de les solidariser. Par exemple, l'élément de liaison 101 est disposé à une première extrémité des platines 100. L'élément de liaison 101 peut présenter une forme générale de poutre, s'étendant selon une direction principale d'extension et présentant une section polygonale, par exemple rectangulaire ou carrée. De manière alternative, et comme illustré sur les figures, l'élément de liaison 101 peut présenter une section cylindrique. Cela permet de limiter le coût de fabrication de cette pièce est de faciliter son assemblage, réduisant ainsi le coût de fabrication du groupe 1.

De préférence, l'élément de liaison 101 est sertie ou emboutie dans des ouvertures portées par les deux platines 100. Ce mode de fixation permet d'éviter toute rotation de l'élément de liaison 101 par rapport aux platines 100. Comme cela apparaîtra par la suite, il faut en effet éviter que l'élément de liaison 101 tourne autour de son axe de location principale.

Le bâti peut en outre comprendre une jonction latérale 102, pouvant être désignée par le terme plaque frontale, de façon à joindre les deux platines 100 du bâti 10 afin de les solidariser. Ainsi, le bâti 10 peut former un cadre de support d'au moins une partie, voire l'ensemble, des éléments du groupe 1. La jonction latérale 102 peut plus particulièrement être fixe par rapport aux platines 100. Selon l'exemple illustré en figure 1, la jonction latérale 102 est disposée à une seconde extrémité des platines 100.

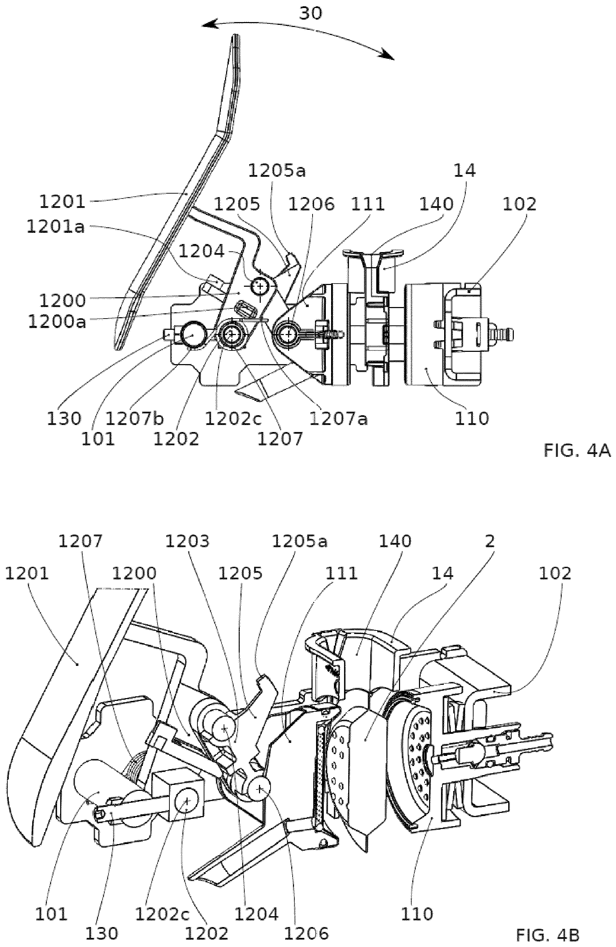

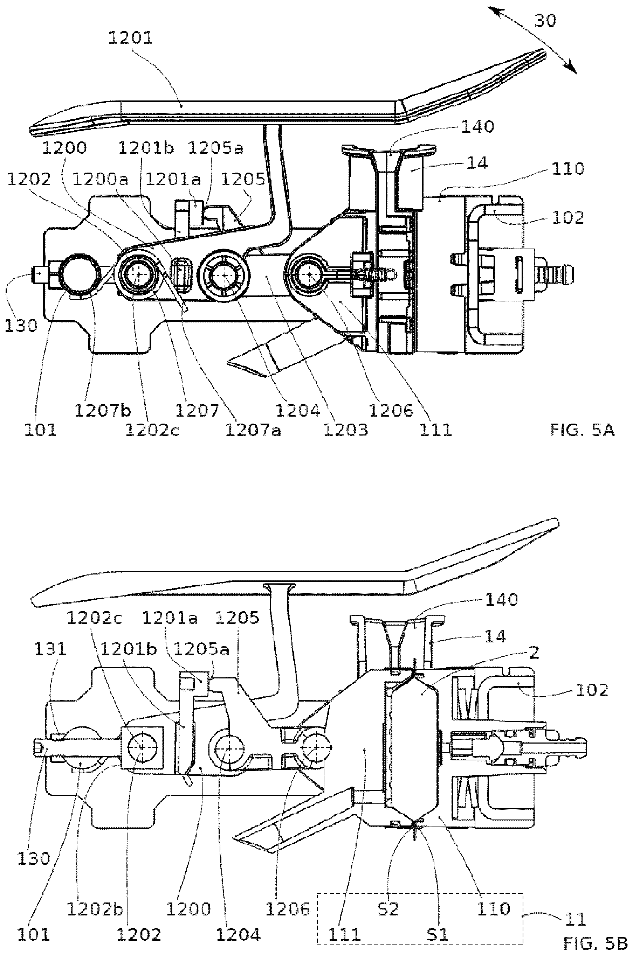

La jonction latérale 102 peut comprendre deux projections 1020 configurées de sorte que chacune est insérée, de préférence sertie, ou clipsée, dans la platine 100 du bâti 10, de préférence dans une ouverture prévue dans la platine 100. Par sertissage, chaque projection 1020 est déformée pour éviter le retrait de la jonction latérale 102 lors de l'utilisation du groupe 1. Selon l'exemple illustré en figure 1, la jonction latérale 102 peut être en forme de U, limitant ainsi le risque de sa déformation. Chaque branche de la forme U s'étend d'une platine 100 à l'autre. Cela permet de renforcer la robustesse du groupe et de limiter encore les déformations. Cette forme de U est particulièrement visible sur les figures 4A et 5A.

Afin de supporter et de maintenir l'agencement des éléments du groupe 1, les platines 100, l'élément de liaison 101, ainsi que la jonction latérale 102 sont de préférence en un matériau propre à maintenir l'agencement des éléments du groupe 1 lors de son utilisation. Plus préférentiellement encore, les platines 100, l'élément de liaison 101, ainsi que la jonction latérale 102, sont en métal.

La chambre d'infusion est maintenant décrite en référence à la figure 1. La chambre d'infusion 11 est configurée de façon à recevoir un conditionnement 2, par exemple par le biais d'une trémie 14 de réception du conditionnement 2. Pour cela, la trémie 14 de réception comprend une ouverture de réception 140.

Dans cet exemple non limitatif la trémie 14 est montée mobile par rapport au bâti 10. Elle est portée par un chariot de réception du conditionnement 15, pouvant également être désignée par le terme guide-dose. Le chariot 15 est mobile en translation entre les deux portions de chambre d'infusion. Le chariot 15 présente plusieurs butées permettant de stopper et de maintenir en position le conditionnement au cours des différentes phases du cycle de préparation de la boisson.

Lors de l'utilisation du groupe 1, la chambre d'infusion 11 présente deux configurations. Dans une configuration ouverte de la chambre d'infusion 11, la chambre peut recevoir et/ou laisser sortir le conditionnement 2. Plus particulièrement, les première portion 110 et deuxième portion 111 de chambre, sont éloignées de façon à permettre la réception ou la sortie du conditionnement introduite dans la trémie 14. Dans une configuration fermée, les première portion 110 et deuxième portion 111 de chambre sont destinées à être disposées autour d'au moins une partie du conditionnement 2 et à enserrer ce dernier, de façon à permettre l'infusion.

Le chariot 15 mobile comporte au moins une butée de réception du conditionnement 2 avant l'introduction de ce dernier dans la chambre infusion. Il comporte également une butée de réception du conditionnement 2 au sein de la chambre d'infusion. Le chariot 15 mobile est monté en translation sur le bâti 10, le long du même axe que la deuxième portion 111. De préférence, un ressort de rappel 1002 permet le déplacement de ce chariot 15 dans un sens. De préférence, ce ressort de rappel 1002 tend à rapprocher le chariot 15 de la deuxième portion 111 lors du passage de la configuration fermée à la configuration ouverte. Ainsi, le ressort de rappel 1002 permet de remettre le chariot 15 en place pour l'éjection d'un conditionnement 2, voire le chargement d'un nouveau conditionnement 2. En outre, le ressort de rappel facilite le dévêtissage du conditionnement 2, i.e., le décollement du conditionnement 2 après infusion hors des portions de chambre. Comme illustré sur les figures, le ressort de rappel 1002 présente une extrémité fixée sur le chariot 15 et une autre extrémité fixée sur la deuxième portion 111. Selon un exemple illustré en figure 5B, la trémie 14 peut être configurée pour être située en amont de la chambre d'infusion 11, ou de façon équivalente décalée vers l'actionneur 12 du groupe 1, lorsque la chambre d'infusion est en configuration fermée, pour faciliter le dévêtissage du conditionnement 2. Selon un mode de réalisation non illustré, la trémie 14 et le chariot ne sont pas solidaires.

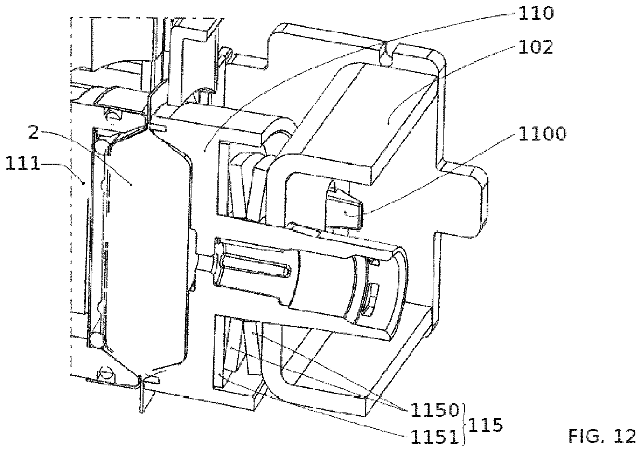

Afin de passer de l'une à l'autre des configurations ouverte ou fermée, l'actionneur 12 est configuré de façon à commander au moins en partie le déplacement d'au moins l'une des portions de chambre. De préférence, l'actionneur commande au moins en partie le déplacement de la deuxième portion 111 de la chambre, la première portion 110 pouvant être fixe par rapport au bâti. Par exemple, la première portion 110 comprend au moins deux projections 1100 insérées dans le bâti 10. Selon un autre exemple, les projections 1100 peuvent être fixées, notamment enclipsées, sur la jonction latérale 102. La solidarisation de la première portion 110 à la jonction latérale 100 par enclipsage est particulièrement visible en figure 1 ou 12. En outre, la portion fixe 110 peut comprendre une arrivée d'eau fixée sur la jonction latérale 102. Selon un mode de réalisation, on insère un conduit de l'arrivée d'eau à travers une ouverture portée par la jonction latérale 102, puis on poursuit l'insertion de l'arrivée d'eau à travers cette ouverture jusqu'à ce que les moyens d'enclipsage 1100 de la première portion 110 coopèrent avec ceux de la jonction latérale 100. La fixation de ces deux pièces est alors réalisée.

Selon un mode de réalisation alternatif, de la gare on peut prévoir prévoir une mobilité de la première portion 110, par exemple en rotation par rapport au bâti. Ainsi, l'éjection du conditionnement 2 peut être facilitée.

L'actionneur 12 comprend plus particulièrement un mécanisme à genouillère 120, configuré de façon à transformer un mouvement de rotation autour d'un axe fixe en rotation par rapport au bâti 10, en un mouvement de translation de la deuxième portion 111 de chambre, selon une direction perpendiculaire à cet axe. La chambre d'infusion peut ainsi passer d'une configuration ouverte à une configuration fermée et inversement. Comme illustré par les figures 1 à 5B, le mécanisme à genouillère peut pour cela comprendre un levier 1201, actionnable 30 manuellement par l'utilisateur ou solidaire d'un motoréducteur, et solidaire d'une pièce d'entrainement également désigné organe d'entrainement 1200. Cet organe 1200 peut être relié à une bielle 1203, cette bielle 1203 pouvant être reliée à la deuxième portion 111 de chambre.

La bielle 1203 peut par exemple être articulée sur la deuxième portion 111 de chambre et sur l'organe d'entrainement 1200. Le mécanisme à genouillère 120 peut être exempt de bielle additionnelle entre ladite bielle 1203 et la deuxième portion 111 de chambre ou l'organe d'entrainement 1200. Le mécanisme à genouillère 120 selon cet exemple permet d'améliorer la robustesse de l'actionneur 12, tout en réduisant le nombre de pièces pour son fonctionnement. Le mécanisme à genouillère 120 peut en outre comprendre uniquement les pièces suivantes en mouvement par rapport au bâti 10 : le levier 1201, la bielle 1203 et la deuxième portion 111 de chambre.

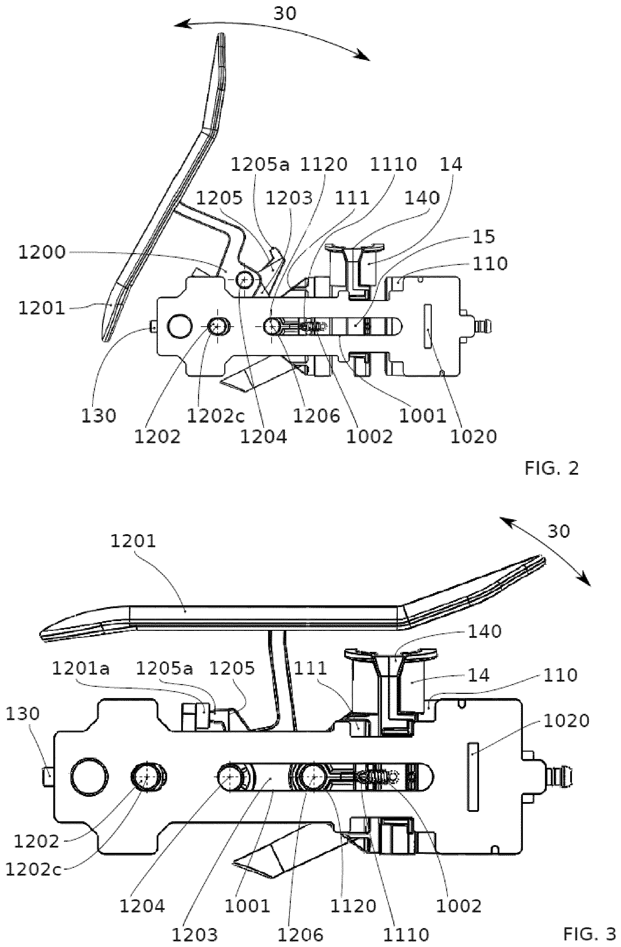

Plus particulièrement, selon l'exemple illustré par les figures 2 et 3, l'organe d'entrainement 1200 peut être monté en rotation par rapport au bâti 10 autour d'une direction d'entraînement 1202c. L'organe d'entrainement 1200 est en outre monté en rotation par rapport à la bielle 1203 autour d'un axe de rotation 1204. La bielle 1203 est reliée à la deuxième portion 111 de chambre mobile autour d'un axe de rotation 1206. Ainsi, lors d'une rotation du levier 1201 lors de son actionnement 30, la deuxième portion 111 de chambre peut être entraînée dans un mouvement principal de translation perpendiculaire à l'axe d'entraînement. De façon équivalente, ce mouvement de translation peut être décrit comme un mouvement principal de translation relative des première portion 110 et deuxième portion 111 de chambre.

Le mouvement principal de translation de la deuxième portion 111 peut en outre être guidé par le bâti 10. Le bâti 10 et la deuxième portion 111 peuvent plus particulièrement être configurés de façon à empêcher une rotation de la deuxième portion 111 de chambre par rapport au bâti et notamment lors du passage alternatif de la configuration ouverte à la configuration fermée de la chambre d'infusion 11. Pour cela, les platines 100 du bâti 10 peuvent comprendre un rail 1001 de coulissement dans lequel s'insère par exemple deux projections 1110, disposées de part et d'autre de la deuxième portion 111 de chambre, ainsi que deux projections 1120, disposées de part et d'autre de la deuxième portion 111 de chambre, de façon à supprimer un degré de liberté en rotation de la portion mobile 111 et à autoriser cette dernière uniquement à coulisser le long du rail 1001 lors de l'actionnement du mécanisme à genouillère 120.

Lors du passage de la configuration ouverte à la configuration fermée de la chambre d'infusion 11, pouvant être illustré par les figures 2 et 3 ou 4A, 4B et 5A, 5B, le levier 1201 peut en outre être actionné de façon à recouvrir l'ouverture de réception 140 de la trémie de réception 14. Ainsi, l'insertion d'un conditionnement est empêchée lorsque la chambre d'infusion 11 est dans la configuration fermée. De préférence, le levier 1201 recouvre alors entièrement l'ouverture de réception 140.

Lors du passage de la configuration ouverte à la configuration fermée de la chambre d'infusion 11, pouvant être illustré par les figures 2 et 3 ou 4A, 4B et 5A, 5B, le mécanisme à genouillère 120 peut en outre comprendre une butée 1205, configurée de façon à stopper le levier 1201 en fin de course du mécanisme à genouillère 120. Pour cela, la butée 1205 peut être portée par la bielle 1203. La butée 1205 peut être configurée de façon à venir en appui sur au moins une portion 1201a du levier 1201. Cette portion 1201a peut ainsi jouer le rôle de réception de la butée 1205, lorsque la chambre d'infusion 11 est en configuration fermée. La butée comprend une extrémité 1205a configurée pour venir au contact de la portion 1201a. La mise en contact de cette 1205a et de cette portion 1201a stoppe le mouvement relatif de la bielle 1203 et du levier 1201 et définit ainsi la fin de course du mouvement du mécanisme à genouillère.

Selon un exemple non-illustré, cette portion 1201a est une projection disposée sur le levier 1201, s'étendant parallèlement à l'axe de rotation 1204 entre l'organe d'entrainement 1200 et la bielle 1203. La projection 1201a comprend une première partie sur laquelle la butée 1205 est destinée à venir en appui, et une deuxième partie s'étendant parallèlement au levier 1201 de façon à augmenter la résistance mécanique de la projection 1201a. En outre, la butée 1205 peut comprendre une projection s'étendant perpendiculairement à la bielle 1203 sur une distance au moins supérieure à la distance entre l'organe d'entrainement 1200 et la première partie de la projection 1201a sur laquelle la butée 1205 est destinée à venir en appui.

Selon un exemple, la butée 1205 et la portion 1201a sont disposées dans un plan médian du groupe 1 de façon à limiter un appui désaxé du mécanisme à genouillère 120, par rapport au mouvement principale de translation de la portion mobile 111. La force de réaction de ce contact est donc également dans le plan médian du groupe ce qui améliore la robustesse de ce dernier. En plus de réduire les sollicitations statiques, cet agencement de la butée 1205 et de la portion 1201a dans le plan médian permet de faciliter la fabrication des pièces, notamment par injection.

Selon l'exemple illustré en figure 5B, l'organe d'entrainement 1200 présente une projection 1201b s'étendant perpendiculairement à la direction d'extension principale de l'organe d'entrainement 1200. La portion 1201a est fixée sur une portion de la projection 1201b, et de préférence à son extrémité.

Le mécanisme à genouillère 120 peut en outre comprendre au moins un élément de retour 1207 de façon à faciliter le passage de la chambre d'infusion 11 de la configuration fermée à la configuration ouverte. Selon un exemple, l'élément de retour est un ressort 1207.Le ressort 1207 peut exercer une force de rappel sur l'organe d'entrainement 1200 ou sur la bielle 1203 de façon à faciliter leur rotation relative, lors du passage de la configuration fermée à la configuration ouverte. De préférence, le ressort 1207 est taré de sorte à ce que lorsque le levier 1201 n'est pas dans la position fermée, le ressort 1207 exerce une force suffisante pour ramener le levier 1201 dans la position.

Le ressort 1207 est de préférence un ressort de torsion. Le ressort peut être disposé autour du premier axe de rotation 1204. Une partie 1207a d'extrémité du ressort 1207 est destinée à venir en appui sur une projection de la bielle 1203, lorsque la chambre d'infusion est en configuration fermée. La projection peut s'étendre selon une direction perpendiculaire à la direction passant par les premier 1204 et deuxième 1206 axes de rotation. Le ressort 1207 présente une deuxième partie d'extrémité 1207b, configuré pour prendre appui sur une portion 1201b portée par le levier 1201.

Selon l'exemple illustré par les figures 4A et 5A, le mécanisme à genouillère comprend deux ressorts 1207 disposés sur l'arbre 1202, de part et d'autre de l'axe médian du groupe. Typiquement, ces deux ressorts 1207 sont disposés de part et d'autre de l'organe d'entrainement 1200. Ainsi, la force de rappel peut être augmentée et répartie de part et d'autre de l'organe d'entrainement 1200, tout en minimisant l'encombrement du groupe 1. En outre, la force de rappel générée par l'ensemble de ces deux ressorts 1207 est centrée sur l'axe médian du groupe. On évite ainsi de créer un couple et donc d'éventuelles torsions ou déformations dans le groupe. Cela permet également de réserver un espace, positionné sur l'axe médian du groupe, pour y localiser la butée 1205 destinée à coopérer avec la portion 1201a.

Une partie d'extrémité 1207a de chaque ressort 1207 est en appui sur un relief de matière 1200a de l'organe d'entrainement 1200. Le ressort 1207 présente une deuxième partie d'extrémité 1207b, configuré pour prendre appui sur l'élément de liaison 101.

Lors du développement du groupe 1, il est apparu que les mécanismes à genouillère peuvent être affectés par les tolérances de fabrication. Selon l'exemple du mécanisme à genouillère 120 précédemment décrit, on comprend que la longueur de course du mécanisme à genouillère 120 peut varier selon la longueur et l'agencement des éléments qui le composent. Dès lors, lorsque la chambre d'infusion 11 est en configuration fermée, la distance entre les première portion 110 et deuxième portion 111 de chambre peut varier. L'étanchéité de la chambre d'infusion 11 peut par conséquent être compromise. Afin de maîtriser l'étanchéité d'un groupe 1 comprenant un mécanisme à genouillère, par exemple tel que précédemment décrit, le groupe 1 comprend un dispositif de réglage 13, disposé sur le bâti 10, et configuré de façon à régler la distance entre les première portion 110 et deuxième portion 111 de chambre, lorsque la chambre d'infusion 11 est en configuration fermée.

Ce réglage de la distance entre les première 110 et deuxième 111 portions de chambre 11 permet une fermeture de la chambre d'infusion 11 tout en limitant la force à appliquer par l'utilisateur sur le levier 1201 Ainsi, la force de fermeture est suffisamment faible pour être exercée par tout utilisateur. Le dispositif de réglage 13 permet donc à la fois d'améliorer l'étanchéité du groupe et de faciliter son utilisation. En outre, les différents éléments du groupe 1 peuvent être dimensionnés pour faire correspondre un niveau d'étanchéité de la chambre d'infusion 11, à une force de fermeture déterminée, à appliquer au levier 1201 par exemple à son extrémité. Cette force peut notamment être déterminée pour une valeur jugée atteignable par tout utilisateur, typiquement une force exercée par la main d'un utilisateur.

Le dispositif de réglage 13 permet en outre de limiter le volume du groupe 1. En effet, on pourrait prévoir d'allonger la longueur du levier 1201 pour augmenter la force transmise à la deuxième portion 111 lors du passage alternativement entre la configuration ouverte et la configuration fermée de la chambre d'infusion 11. Toutefois, cette solution présenterait l'inconvénient d'augmenter significativement le volume du groupe 1. Le dispositif de réglage 13 permet de répondre aux contraintes d'étanchéité et de facilité d'utilisation, tout en présentant un encombrement réduit.

En outre, pour améliorer l'étanchéité du groupe 1 tout au long de son utilisation, le groupe d'infusion 1 peut en outre comprendre un système de compensation d'étanchéité 115 configuré pour exercer sur la première portion 110 et/ou la deuxième portion 111 de chambre une force de compression tendant à serrer mutuellement la première portion 110 et la deuxième portion 111 dans la configuration fermée de la chambre d'infusion 11. Pour cela, le système de compensation d'étanchéité 115 peut comprendre au moins un organe élastique. Ainsi, malgré une éventuelle usure des éléments du groupe 1, ou un éventuel déréglage de la longueur de course du mécanisme à genouillère 120, l'étanchéité de la chambre 11 peut être garantie. L'organe élastique peut plus particulièrement exercer une force de compression suffisante pour maintenir la chambre d'infusion 11 fermée de façon étanche, par exemple lors de l'infusion d'une boisson. La force de compression peut en outre compenser élastiquement un éventuel écart résiduel entre la première portion 110 et la deuxième portion 111 de chambre 11 dans la configuration fermée de la chambre d'infusion 11. Cet écart peut par exemple survenir en cas d'usure très importante des pièces ou dans un cas où les tolérances de fabrication sont particulièrement larges. Cela permet d'apporter une solution efficace pour réduire le coût de production d'une machine.

En alternative ou en complément, le groupe d'infusion 1 peut comprendre un dispositif d'étanchéité 114 déformable élastiquement et disposé sur la première portion 110 et/ou la deuxième portion 111 de chambre, de sorte que le dispositif d'étanchéité 114 est disposé au contact de chacune des première 110 et deuxième 111 portions de chambre, dans la configuration fermée de la chambre d'infusion 11. Ainsi, le dispositif d'étanchéité 114 maintient la chambre d'infusion 11 fermée de façon étanche, notamment lors de l'infusion d'une boisson.

Le dispositif de réglage 13 est maintenant décrit en détail. Plus particulièrement, le dispositif de réglage 13 peut être configuré de façon à déplacer la deuxième portion 111 de chambre par rapport au bâti 10, selon la direction principale de translation de la deuxième portion 111, directement ou par l'intermédiaire du mécanisme à genouillère 120. Par exemple, le déplacement du mécanisme à genouillère 120 permet d'ajuster la position de la deuxième portion 111 de chambre. De façon alternative ou complémentaire, le dispositif de réglage 13 peut être configuré de façon à déplacer la première portion 110 de chambre, selon la direction principale de translation de la deuxième portion 111. En outre, on peut prévoir que le dispositif de réglage 13 comprenne un premier organe de réglage configuré de façon à déplacer la deuxième portion 111 de chambre par rapport au bâti 10 et un deuxième organe de réglage configuré de façon à déplacer la première portion 110 de chambre par rapport au bâti 10.

Lorsque la chambre d'infusion est dans la configuration fermée, la distance entre les première portion 110 et deuxième portion 111 de chambre peut ainsi être réglée de façon à maîtriser l'étanchéité de la chambre d'infusion 11. Plus particulièrement, lorsque les première portion 110 et deuxième portion 111 de chambre sont directement en contact, cette distance peut être réglée de façon à être nulle. Lorsque les surfaces S1 et S2 des première portion 110 et deuxième portion 111 de chambre sont en contact par le biais d'un conditionnement 2, cette distance peut être réglée de façon à être nulle ou à être non nulle mais inférieure ou sensiblement égale à l'épaisseur du conditionnement 2 séparant les surfaces S1 et S2 des première portion 110 et deuxième portion 111 de chambre. Selon l'exemple illustré en figure 5B, une collerette 20 du conditionnement 2 peut ainsi être enserrée entre les première portion 110 et deuxième portion 111 de chambre.

Le dispositif de réglage 13 peut en outre être disposé dans un plan médian du groupe 1, afin d'assurer un bon alignement des première portion 110 et deuxième portion 111 de chambre lors de leur déplacement relatif selon la direction principale de translation de la deuxième portion 111.

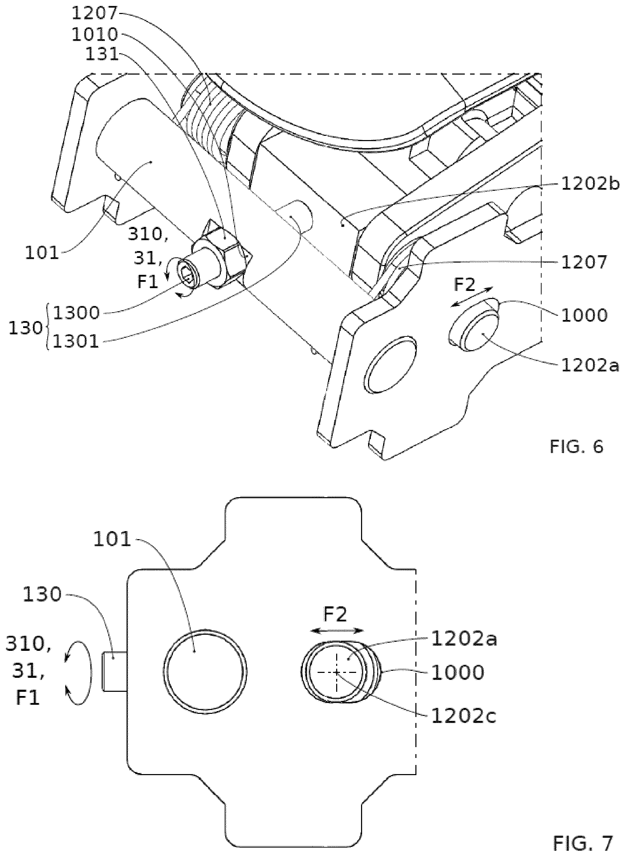

Un exemple du dispositif de réglage 13 est maintenant décrit en référence aux figures 5B à 7, ainsi qu'en référence à l'exemple du mécanisme à genouillère 120 précédemment décrit. Le dispositif de réglage 13 peut être configuré de façon à déplacer l'organe d'entraînement 1200, selon une direction parallèle au mouvement de translation relative des première portion 110 et deuxième portion 111 de chambre. Pour cela, selon l'exemple illustré en figure 6, le dispositif de réglage 13 peut comprendre une vis de réglage 130 montée en rotation sur le bâti 10. La rotation de la vis de réglage 130 entraine alors un déplacement de l'extrémité de la vis 130 le long de la direction principale de translation. Plus particulièrement, sur cet exemple non limitatif, la vis de réglage 130 est montée en rotation de façon à traverser l'élément de liaison 101 pouvant relier les deux platines 100 du bâti 10, par exemple par le biais d'un écrou 131. La vis de réglage 130 peut être configurée de façon à déplacer l'organe d'entraînement 1200 lorsque la vis de réglage 130, et plus particulièrement lorsqu'une tête ou une empreinte 1300 de la vis 130, est entrainée en rotation. De préférence, la vis est entrainée en rotation par une empreinte 1300, pour minimiser l'encombrement à l'intérieur du groupe 1.

Selon l'exemple illustré en figure 6, la vis de réglage 130 peut traverser l'élément de liaison 101 de façon à venir en appui sur l'arbre 1202. Plus particulièrement, la vis de réglage 130 peut traverser l'élément de liaison 101 selon un plan transverse médian à cet élément 101. Comme énoncé précédemment, l'élément de jonction 101 peut être de section circulaire et présenter un méplat 1010 pour assurer une surface de contact plus stable entre la vis de réglage 130 et l'élément de jonction 101. L'élément de jonction 101 peut en outre être serti dans les platines 100 du bâti 10 pour éviter sa rotation selon une direction parallèle à l'axe de rotation 1202c, et ainsi garantir l'horizontalité de la vis 130. Ainsi, la rotation de la vis 130 entraîne le déplacement horizontal de la de rotation 1202c. Par ailleurs, la fixation de l'élément de jonction 101 par sertissage est avantageusement de coût réduit, réduisant le coût de fabrication du groupe 1.

Selon cet exemple, l'arbre 1202 s'étend entre les platines 100 de bâti, selon une direction perpendiculaire à l'organe d'entrainement 1200. Selon l'exemple illustré en figure 7, au moins une portion 1202a de l'arbre1202, et de préférence au moins une extrémité 1202a, peut être insérée dans un oblong 1000 disposé sur au moins une platine 100 du bâti. L'oblong 1000 peut être une rainure, une ouverture ou un trou disposé sur au moins une platine 100, et peut s'étendre selon une direction parallèle au mouvement principal de translation relative des première portion 110 et deuxième portion 111 de chambre.

Ainsi, lorsque la chambre d'infusion 11 est en configuration fermée, l'empreinte 1300 de la vis de réglage 130 peut être entraînée en rotation selon la flèche F1, comme illustré dans les figures 6 et 7. Ceci peut induire le déplacement de l'arbre 1202 dans l'oblong 1000, selon la flèche F2, parallèle au mouvement principal de translation relative de la deuxième portion 111 de chambre. Ainsi, le mécanisme à genouillère 120 est déplacé par rapport au bâti 10.

De façon alternative ou complémentaire, le dispositif de réglage peut comprendre une vis de réglage 130 configurée de façon à venir en appui sur la première portion 110 de chambre afin d'ajuster la position de la première portion 110 par rapport au bâti 10. Par exemple, au moins une projection 1100 de la première portion 110, voire l'ensemble de ses projections 1100, peut être disposée au moins en partie dans un oblong 1000. En outre, afin que le dispositif de réglage 13 puisse déplacer la première portion 110 de chambre et le mécanisme à genouillère 120 par rapport au bâti 10, le dispositif de réglage peut comporter deux vis de réglage 130 telles que précédemment décrites.

De manière avantageuse, l'organe d'entraînement 1200 est monté en rotation libre sur l'arbre 1202. Ainsi, l'organe d'entraînement 1200 peut tourner autour de l'axe 1202c lorsqu'il est actionné, alors que l'arbre 1202 reste fixe, en rotation, par rapport au bâti 10. Par conséquent, quelle que soit la position de l'organe d'entraînement 1200, l'extrémité distale de la vis 130 reste au contact d'une même zone de l'arbre 1202, sans créer de frottement. La robustesse et la durée de vie du groupe 1 en sont par conséquent améliorées.

Selon un exemple, l'arbre 1202 peut présenter un méplat définissant une surface plane perpendiculaire à la direction principale d'extension du corps 1301 de la vis 130. Selon un autre exemple, et comme illustré en figure 6, l'arbre 1202 peut présenter une section 1202b rectangulaire, voire carrée, définissant une surface plane perpendiculaire à la direction principale d'extension du corps 1301 de la vis 130. L'extrémité distale de la vis 130 est au moins en partie en appui la surface plane formée. Cela permet d'assurer une surface de contact plus stable et mieux maîtrisée entre l'extrémité de la vis de réglage 130 et l'arbre 1202. La robustesse et la tenue dans le temps du mécanisme de réglage en sont améliorées.

L'arbre 1202 peut présenter une forme complémentaire de celle du bâti 10 afin d'empêcher leur rotation respective autour de l'axe 1202c. Alternativement, le contact entre l'extrémité distale de la vis 130 et le méplat 1202b suffit à empêcher cette rotation relative.

En outre, afin d'optimiser l'étanchéité de la chambre d'infusion 11 dans sa configuration fermée, l'une ou l'autre, voire les deux, parmi les première portion 110 et deuxième portion 111 de chambre peuvent comprendre un relief annulaire 113. Ces reliefs peuvent être disposés en vis-à-vis lorsque la chambre d'infusion 11 est en configuration fermée. Ces reliefs annulaires peuvent être configurés de sorte que la force de fermeture, générée par le mécanisme à genouillère 120, est transférée depuis la deuxième portion 111 à la première portion 110, en passant par l'interface de contact entre les reliefs annulaires, tout en concentrant, sur cette interface, la force générée lors de la fermeture de la chambre d'infusion 11. La réduction de l'interface de contact permet de concentrer la pression générée par la fermeture de la chambre d'infusion 11 sur cette surface et donc d'augmenter la force de contact sur cette zone. Le conditionnement se trouve alors fortement pincé. Ainsi, lors de l'infusion d'un conditionnement 2, le risque de fuite de la chambre d'infusion 11 est minimisé, voire évité.

On peut en outre prévoir qu'une pluralité de reliefs concentriques soit disposée sur l'une ou l'autre, voire les deux, parmi les première portion 110 et deuxième portion 111 de chambre. Par exemple, l'une ou l'autre, voire les deux, parmi les première portion 110 et deuxième portion 111 de chambre peuvent présenter au moins un relief annulaire additionnel113a, configuré de façon à être plus compressible que le relief annulaire 113. Ainsi, une compensation élastique permet d'assurer l'étanchéité de la chambre d'infusion 11. Ce relief annulaire additionnel 113a peut être disposé de façon juxtaposée au relief annulaire 113 de l'une ou l'autre, voire les deux, parmi les première portion 110 et deuxième portion 111 de chambre.

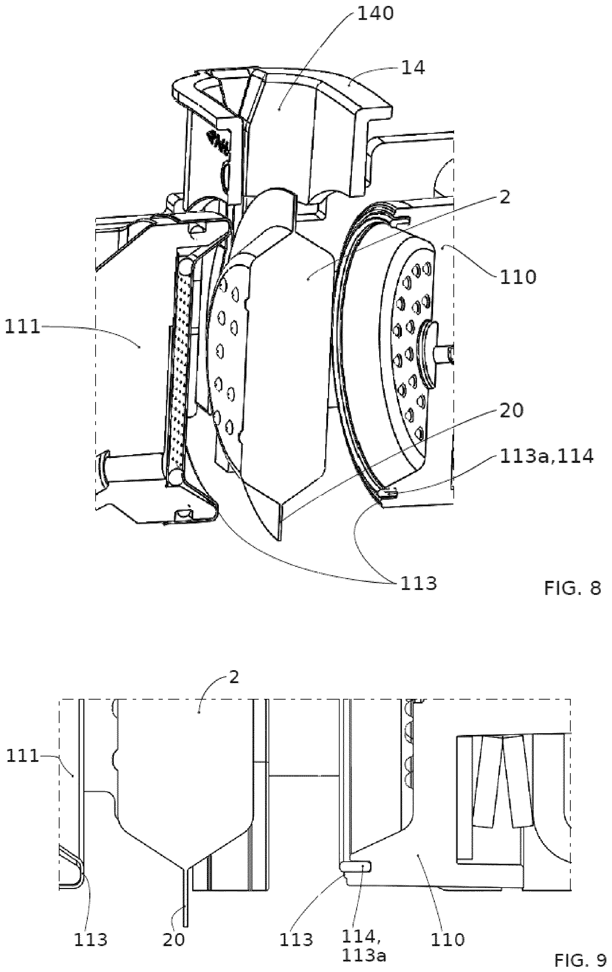

Un exemple d'un mode de réalisation de ce relief est maintenant décrit en référence aux figures 8 à 10. Comme illustré en figure 8 et 9, la première portion 110 de chambre peut présenter un relief annulaire 113, s'étendant en direction de la deuxième portion 111 de chambre sur une première distance. La première portion 110 de chambre peut en outre présenter un relief annulaire 113, s'étendant en direction de la deuxième portion 111 de chambre, par exemple sur une distance inférieure à la première distance. Par exemple, les reliefs annulaires 113 correspondent à une projection annulaire respectivement de la première portion 110 et de la deuxième portion 111 de chambre. Au moins l'un des reliefs annulaires peut présenter un pourtour en demi-cercle au contact avec la collerette 20, pour minimiser sa surface de contact avec la collerette et ainsi augmenter l'étanchéité.

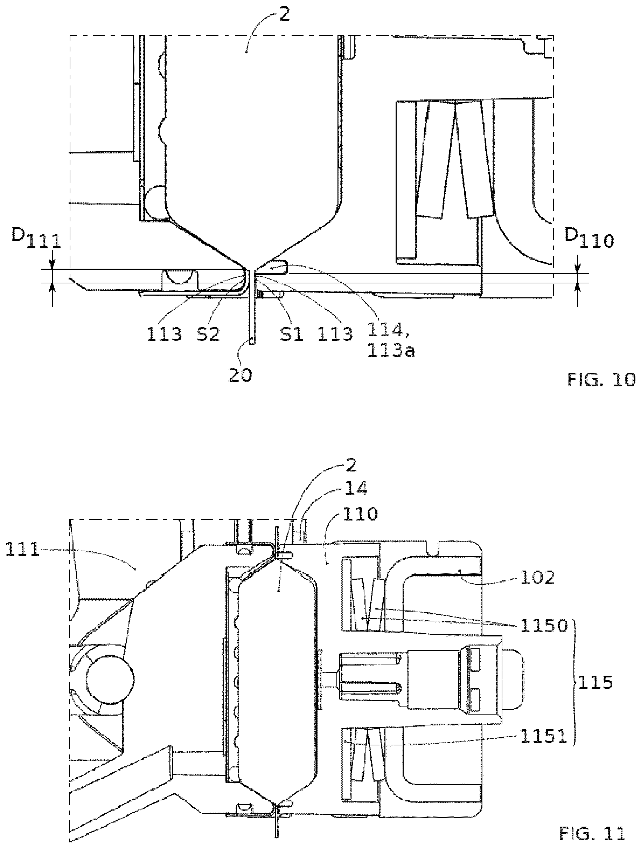

Le relief annulaire 113 de la première portion peut présenter une surface S1, de dimension D110, en projection sur un plan perpendiculaire à la direction principale de translation. Le relief annulaire de la deuxième portion 111 peut en outre présenter une surface S2 et de dimension D111, en projection sur un plan perpendiculaire à la direction principale de translation. Comme illustré en figure 10, la dimension D110 peut être sensiblement égale à 0,70 de la dimension D111, et de préférence 0,5 de la dimension D111. De préférence, les reliefs annulaires 113 présentent une dureté sensiblement identique.

Le système de compensation d'étanchéité 115 est maintenant décrit en détail en référence aux figures 11 et 12. L'au moins un organe élastique 1150 du système de compensation d'étanchéité 115 est configuré de façon à être comprimé élastiquement selon une direction parallèle au mouvement de translation relative des première portion 110 et deuxième portion 111 de chambre. Ainsi, l'organe élastique 1150 peut exercer une force de compression selon cette direction, pour serrer mutuellement la première portion 110 et la deuxième portion 11 dans la configuration fermée de la chambre d'infusion 11. Ainsi, la contribution élastique de l'organe élastique 1150 permet de minimiser encore, voire d'éviter, le risque de fuite de la chambre d'infusion 11, et de compenser un éventuel écart entre la première portion 110 et la deuxième portion 111 de chambre 11, par exemple dû à l'usure du groupe 1. Par exemple, le système de compensation d'étanchéité 115 permet un débattement de la portion fixe 110 de chambre 11 inférieur à 1/(5*Lc), Lc étant la longueur de la course parcourue par la portion mobile 111 entre la configuration fermée la configuration ouverte. De préférence, ce débattement est inférieur à 1 /(10*Lc).

Par exemple, le débattement de la portion fixe 110 autorisaient par le système de compensation d'étanchéité 115 est inférieure à quelques dixièmes de millimètre, de préférence inférieure à 100 dixièmes de millimètre. Typiquement, ce débattement est compris entre 5 et 50 dixièmes de millimètre.

L'organe élastique 1150 peut être comprimé lors du passage de la configuration ouverte à la configuration fermée de la chambre d'infusion 11, voire uniquement dans la configuration fermée de la chambre d'infusion 11 ou en fin de course avant d'atteindre la configuration fermée de la chambre d'infusion 11. De façon alternative, l'organe élastique 1150 peut être comprimé élastiquement dans la configuration ouverte de la chambre d'infusion et dans la configuration fermée de la chambre d'infusion, pour exercer une force de compression quelle que soit la configuration de la chambre, la force de compression dans la configuration fermée étant naturellement plus importante que dans la configuration ouverte. Ainsi, l'organe élastique 1150 est compressé de façon continue, limitant une éventuelle usure liée à des compressions et décompressions successives.

Ainsi, l'organe élastique 1150 se déforme de quelques dixièmes lorsque le groupe passe en configuration fermée. Il restitue cette déformation en cas d'usure afin de rattraper le jeu.

L'organe élastique 1150 peut être un ressort de compression. De préférence, il s'agit d'une ou de plusieurs rondelles déformables en compression, ces rondelles étant habituellement qualifiées de rondelles Belleville. De préférence, l'organe élastique 1150 est formé d'une pluralité de rondelles de compression. L'organe élastique 1150 peut être positionné entre le bâti 10 et la première portion 110 de chambre. Selon l'exemple illustré par les figures 11 et 12, l'organe élastique 1150 est disposé entre la jonction latérale 102 et une plaque 1151 de répartition d'effort. Ainsi, la force de compression exercée par l'organe élastique 1150 est répartie d'une part par le biais de la plaque 1151 sur la portion fixe 110 de chambre 11, et d'autre part par le biais de la jonction latérale 102 sur le bâti 10. Selon un exemple, la plaque 1151 est en métal pour minimiser une usure locale qui, en l'absence de cette plaque 1151 de répartition d'effort, serait induite par la forte pression appliquée sur la surface de contact entre l'organe élastique 1150 et la portion fixe 110 de la chambre 11.

Le dispositif d'étanchéité 114 est maintenant décrit en détail en référence aux figures 8 à 10. Le dispositif d'étanchéité 114 peut comprendre un corps déformable élastiquement, notamment en compression, et disposé entre la première portion 110 et la deuxième portion de façon à être au contact de chacune des première 110 et deuxième portions 111 de chambre 11 dans sa configuration fermée. Selon un exemple, le corps est annulaire et est disposé de façon sensiblement concentrique sur un relief annulaire d'au moins l'une parmi la première portion 110 et la deuxième portion 111 de chambre 11.

Ainsi, lors de la fermeture de la chambre d'infusion 11, les reliefs annulaires 113 des première portion 110 et deuxième portion 111 de chambre peuvent enserrer une collerette 20 du conditionnement 2 par le biais d'une compression du dispositif d'étanchéité 114. Ainsi, la contribution élastique du dispositif d'étanchéité 114 permet de minimiser encore, voire d'éviter, le risque de fuite de la chambre d'infusion 11.

Le dispositif d'étanchéité 114 est par exemple disposé sur le relief annulaire de la deuxième portion 111, comme illustré en figure 9. De façon alternative ou complémentaire, le dispositif d'étanchéité 114 peut comprendre un relief annulaire 113a additionnel déformable élastiquement. Selon l'exemple illustré en figure 9, le relief annulaire 113 de la première portion 110 peut être juxtaposé à un relief annulaire additionnel 113a. Ce relief annulaire additionnel 113a peut être en matériau compressible, tel qu'un joint élastomère moulé sur la première portion 110 de chambre. Plus particulièrement, le relief annulaire additionnel 113a peut être compressé jusqu'à ce que les reliefs annulaires 113 soient en contact avec la collerette 20, comme illustré en figure 10.

Les différents éléments du groupe 1 peuvent être formés par des matériaux limitant le coût de fabrication du groupe tout en assurant sa robustesse au fil des utilisations du groupe 1. Le levier 1201 et l'organe d'entrainement 1200 peuvent être en aluminium injecté. Le bâti 10, les axes de rotation, les ressorts 1207 et la vis 130 peuvent être en métal. La bielle 1203 peut être en plastique.

Le groupe 1 selon l'invention peut être réglé par un procédé 3 de réglage, comprenant une étape au cours de laquelle le mécanisme à genouillère 120 est actionné 30 de façon à passer la chambre d'infusion en configuration fermée, par exemple tel qu'illustré par le passage de la configuration ouverte de la figure 2 à la configuration fermée de la figure 3. Lorsque la chambre d'infusion 11 est en configuration fermée, une étape d'action 31 sur le dispositif de réglage 13 est en outre réalisée, de façon à régler la distance entre les première portion 110 et deuxième portion 111 de chambre. Par exemple, l'étape d'action 31 comprend une étape de vissage 310 de la vis de réglage 130, par exemple selon les modes de réalisation du groupe 1 précédemment décrits, et par exemple tel qu'illustré par les figures 6 et 7. Le dispositif de réglage 13 peut en outre être réglé manuellement ou par l'intermédiaire d'un outil actionné manuellement.

Le groupe 1 selon l'invention peut en outre être fabriqué par un procédé de fabrication, comprenant une étape dans laquelle un groupe 1 selon les caractéristiques précédemment énoncées est fourni, suivi d'un procédé 3 de réglage du groupe 1, par exemple tel que décrit plus haut. Pour assembler le groupe 1, le mécanisme à genouillère 120 peut d'abord être assemblé, puis monté sur une première platines 100 du bâti. La portion 110 de la chambre d'infusion peut être fixée sur la jonction latérale 102. La trémie 14, le chariot 15, l'élément de liaison 101 et la jonction latérale 102 peuvent être montés sur la première platine 100 du bâti 10. La deuxième platine 100 peut être rapportée sur l'ensemble déjà formé. L'élément de jonction 101 et la jonction latérale 102 peuvent ensuite être sertis aux platines 100 du bâti 10.

Le groupe 1 peut être compris dans une machine de préparation de boisson par infusion. On peut notamment prévoir que le dispositif de réglage 13, et notamment la vis de réglage 130, ne soit pas accessible une fois le groupe 1 monté sur la machine de préparation de boisson. Ainsi, le risque de modification du réglage par inadvertance est minimisé, voire évité, par exemple lors de la préparation d'une boisson.

L'invention n'est pas limitée aux modes de réalisations précédemment décrits et s'étend à tous les modes de réalisation couverts par les revendications.

Notamment, on peut prévoir que le dispositif de réglage 13 soit adapté à d'autres mécanismes à genouillère que celui décrit en exemple ici. Par exemple, on peut prévoir que le mécanisme à genouillère 120 comprenne une pluralité de bielles 1203 en série.

### REFERENCES

- 1: Groupe d'infusion
- 10: Bâti
- 100: Platine
- 1000: Oblong
- 1001: Rail de coulissement
- 1002: Élément de rappel
- 1003: Forme de maintien
- 101: Élément de liaison
- 1010: Méplat
- 102: Jonction latérale
- 1020: Projection
- 11: Chambre d'infusion
- 110: Première portion
- 1100: Projection
- 111: Deuxième portion
- 1110: Projection
- 1120: Projection
- 113: Relief annulaire
- S1: Surface du relief annulaire de la première portion
- D110: Dimension du relief annulaire de la première portion
- S2: Surface du relief annulaire de la deuxième portion
- D111: Dimension du relief annulaire de la deuxième portion
- 113a: Relief annulaire additionnel
- 114: Dispositif d'étanchéité
- 115: Système de compensation d'étanchéité
- 1150: Organe élastique
- 1151: Plaque de répartition de l'effort
- 12: Actionneur
- 120: Mécanisme à genouillère
- 1200: Organe d'entraînement
- 1200a: Relief de matière
- 1201: Levier
- 1201a: Portion du levier
- 1201b: Portion du levier
- 1202: Arbre
- 1202a: Portion de l'arbre
- 1202b: Section rectangulaire
- 1202c: Direction d'entraînement
- 1203: Bielle
- 1204: Premier axe de rotation
- 1205: Butée
- 1205a: Extrémité
- 1206: Deuxième axe de rotation
- 1207: Élément de retour
- 1207a: Première partie d'extrémité
- 1207b: Deuxième partie d'extrémité
- 13: Dispositif de réglage
- 130: Vis de réglage
- 1300: Tête de vis
- 1301: Portion du corps de vis
- 131: Écrou
- 14: Trémie de réception
- 15: Chariot de réception
- 140: Ouverture de réception
- 2: Conditionnement
- 20: Collerette
- 30: Actionnement du mécanisme à genouillère
- 31: Action sur le dispositif de réglage
- 310: Vissage

## Revendications

1. Groupe (1) d'infusion pour une machine d'infusion de boisson à partir d'un produit contenu dans un conditionnement (2), le groupe (1) comprenant :
- un bâti (10) de support du groupe (1) ;
- une chambre (11) d'infusion configurée pour recevoir le conditionnement (2) lors de l'infusion, ladite chambre (11) étant définie par au moins une première portion (110) et une deuxième portion (111) de chambre, la deuxième portion (111) de chambre étant mobile relativement au bâti (10) par un mouvement principal de translation de la deuxième portion (111), de façon à s'éloigner ou se rapprocher de la première portion (110) de chambre afin d'amener la chambre d'infusion (11) dans une configuration respectivement ouverte ou fermée ;
- un actionneur (12) agencé pour commander en partie au moins le déplacement de la deuxième portion (111), l'actionneur (12) comprenant un mécanisme à genouillère (120), la deuxième portion (111) étant portée au moins en partie par l'actionneur (12) ;
le groupe (1) comprend également un dispositif de réglage (13) disposé sur le bâti (10), et configuré pour régler la distance entre les première portion (110) et deuxième portion (111) de chambre lorsque la chambre d'infusion (11) est dans la configuration fermée, **caractérisé en ce que** le dispositif de réglage (13) est configuré pour déplacer au moins l'une parmi la première portion (110) et la deuxième portion (111) de chambre par rapport au bâti (10), la deuxième portion (111) de chambre étant déplacée par le dispositif de réglage (13) directement ou par l'intermédiaire d'un déplacement du mécanisme à genouillère (120) par le dispositif de réglage (13).

2. Groupe (1) d'infusion selon la revendication précédente, dans lequel le mécanisme à genouillère (120) comprend :
- un levier (1201) actionnable manuellement par l'utilisateur ou entrainé par un motoréducteur,
- un organe d'entrainement (1200), solidaire du levier (1201), ledit organe (1200) étant monté en rotation par rapport au bâti (10) autour d'une direction d'entraînement (1202c),
- au moins une, et de préférence une unique, bielle (1203) articulée en rotation par rapport audit organe (1200) autour d'un premier axe de rotation (1204), ladite bielle (1203) étant en outre reliée, de préférence directement, à la deuxième portion (111) de chambre mobile, de préférence en étant articulée en rotation autour d'un deuxième axe de rotation (1206), ladite bielle (1203) étant configurée pour entraîner ladite deuxième portion (111) dans un mouvement principal de translation,
de préférence le dispositif de réglage (13) est configuré pour déplacer l'organe d'entraînement (1200), de préférence selon une direction parallèle au mouvement principal de translation de la deuxième portion (111).

3. Groupe (1) d'infusion selon la revendication précédente, dans lequel le dispositif de réglage (13) comprend au moins une vis de réglage (130) montée en rotation sur le bâti (10), et configurée pour déplacer l'organe d'entraînement (1200) lorsque ladite vis (1300) est entraînée en rotation,
de préférence ladite vis (130) est en appui sur l'un parmi l'organe d'entrainement (1200) et un arbre d'entrainement (1202) sur lequel l'organe d'entrainement (1200) est monté en rotation autour d'une direction d'entrainement (1202c), de façon à déplacer l'arbre d'entraînement (1202) selon un mouvement de translation dont la direction est parallèle au mouvement principal de translation de la deuxième portion (111) de chambre, au moins une portion (1202a) dudit arbre (1202) étant disposée dans un oblong (100) du bâti (10), ledit oblong (100) s'étendant parallèlement au mouvement principal de translation de la deuxième portion (111) de chambre.

4. Groupe (1) d'infusion selon la revendication 1, dans lequel le dispositif de réglage (13) est configuré pour déplacer la première portion (110) de chambre par rapport au bâti (10) selon une direction parallèle au mouvement principal de translation de la deuxième portion (111) de chambre, de préférence le dispositif de réglage comprend au moins une vis de réglage (130) montée en rotation sur le bâti (10), et configurée pour déplacer la première portion (110) de chambre lorsque ladite vis (130) est entraînée en rotation, selon un mouvement de translation dont la direction est parallèle au mouvement principal de translation de la deuxième portion (111) de chambre.

5. Groupe (1) d'infusion selon l'une quelconque des revendications précédentes, dans lequel, le mécanisme à genouillère (120) comprenant un levier (1201) actionnable manuellement par l'utilisateur ou solidaire d'un motoréducteur, ledit levier (1201) est stoppé en fin de course du mécanisme à genouillère (120) par au moins une butée (1205) disposée sur le mécanisme à genouillère (120), lors du passage de la configuration ouverte à la configuration fermée de la chambre d'infusion (11),
de préférence ledit levier (1201) est solidaire d'un organe d'entrainement (1200), ledit organe étant monté en rotation par rapport au bâti (10) autour d'une direction d'entraînement (1202c), ledit organe (1202) étant en outre monté en rotation par rapport à une bielle (1203) autour d'un premier axe de rotation (1204), ladite au moins une butée (1205) est disposée sur la bielle (1203) de façon à venir en appui sur au moins une portion (1201a) du levier (1201), lorsque la chambre d'infusion (11) est en configuration fermée.

6. Groupe (1) d'infusion selon l'une quelconque des revendications précédentes, dans lequel le dispositif de réglage (13) est configuré pour être réglé manuellement ou par l'intermédiaire d'un outil actionné manuellement.

7. Groupe (1) d'infusion selon l'une quelconque des revendications précédentes, dans lequel les première portion (110) et deuxième portion (111) de chambre comprennent chacune un relief annulaire (113) disposés en vis-à-vis lorsque la chambre d'infusion (11) est en configuration fermée, l'un des reliefs annulaires (113) présentant, en projection sur un plan perpendiculaire à une direction parallèle au mouvement principal de translation de la deuxième portion (111), une surface (S1) inférieure à 0,7 et de préférence à 0,1 fois la surface (S2) de l'autre des reliefs annulaires (113).

8. Groupe (1) d'infusion selon l'une quelconque des revendications précédentes, dans lequel, le dispositif de réglage (13) comprend au moins une vis de réglage (130) montée en rotation sur le bâti (10), la vis de réglage (130) étant configurée pour déplacer au moins l'une parmi la première portion (110) et la deuxième portion (111) de chambre lorsque ladite vis (1300) est entraînée en rotation, et dans lequel le bâti comprend au moins deux platines (100, 100) s'étendant principalement selon des directions parallèles au mouvement principal de translation de la deuxième portion (111), le bâti (10) présentant une forme générale de « U » dont les branches sont chacune formées par une platine (100, 100), le mécanisme à genouillère étant disposé entre les deux platines (100, 100), les deux platines (100, 100) étant liées entre elles par l'intermédiaire d'au moins un élément de liaison (101), l'élément de liaison (101) portant la vis de réglage (130).

9. Groupe (1) d'infusion selon l'une quelconque des revendications précédentes, le groupe (1) comprenant en outre un système de compensation d'étanchéité (115) comprenant au moins un organe élastique (1150) configuré pour exercer sur au moins l'une parmi la première portion (110) et la deuxième portion (111) de chambre une force de compression tendant à serrer mutuellement la première portion (110) et la deuxième portion (111) dans la configuration fermée de la chambre d'infusion (11)
de préférence l'au moins un organe élastique (1150) est configuré pour être comprimé élastiquement dans la configuration ouverte de la chambre d'infusion (11) et dans la configuration fermée de la chambre d'infusion (11), l'au moins un organe élastique comprenant au moins l'un parmi un ressort de compression et au moins une rondelle de compression,
de préférence l'au moins un organe élastique, par exemple une pluralité de rondelles de compression, est positionné entre le bâti (10) et la première portion (110) de chambre.

10. Groupe (1) d'infusion selon l'une quelconque des revendications précédentes, le groupe (1) comprenant en outre un dispositif d'étanchéité (114) déformable élastiquement et disposé sur au moins une parmi la première portion (110) et une deuxième portion (111) de chambre, de sorte que le dispositif d'étanchéité (114) est disposé au contact de chacune des première (110) et deuxième (111) portions de chambre, dans la configuration fermée de la chambre d'infusion (11).

11. Procédé de réglage d'un groupe (1) d'infusion selon l'une quelconque des revendications précédentes, comprenant au moins les étapes suivantes :
- actionner (30) le mécanisme à genouillère (120) de façon à passer la chambre d'infusion (11) en configuration fermée ;
- agir (31) sur le dispositif de réglage (13) afin de régler la distance entre les première portion (110) et deuxième portion (111) de chambre, lorsque la chambre d'infusion (11) est dans la configuration fermée,
de préférence, le dispositif de réglage (13) comprend au moins une vis de réglage (130) montée en rotation sur le bâti (10), l'étape d'action (31) sur le dispositif de réglage (13) comprend une étape de vissage (310) de ladite vis (130) de façon à déplacer au moins l'un parmi le mécanisme à genouillère (120) et la première portion (110) de chambre par rapport au bâti (10),
de préférence l'étape d'action (31) sur le dispositif de réglage (13) est effectuée manuellement ou par l'intermédiaire d'un outil actionné manuellement.

12. Procédé de fabrication d'un groupe (1) d'infusion, comprenant au moins les étapes suivantes :
- fournir un groupe (1) d'infusion selon l'une quelconque des revendications 1 à 10 :
- mettre en œuvre le procédé de réglage du groupe (1) d'infusion selon la revendication 11.

13. Machine de préparation de boisson par infusion, à partir d'un produit contenu dans un conditionnement, comprenant un groupe (1) d'infusion selon l'une quelconque des revendications 1 à 10 ainsi qu'au moins une chaudière et une pompe, la chaudière et la pompe étant configurées pour alimenter la chambre d'infusion avec un fluide chauffé et sous pression.

14. Ensemble comprenant une machine de préparation de boisson selon la revendication 13 et au moins un conditionnement (2).

## Patentansprüche

1. Brühgruppe (1) für eine Getränkebrühmaschine aus einem in einem Packstück (2) enthaltenen Produkt, wobei die Gruppe (1) umfasst:
- ein Stützgestell (10) der Gruppe (1);
- eine Brühkammer (11), die konfiguriert ist, um das Packstück (2) beim Brühen aufzunehmen, wobei die Kammer (11) durch mindestens einen ersten Kammerabschnitt (110) und einen zweiten Kammerabschnitt (111) definiert ist, wobei der zweite Kammerabschnitt (111) in Bezug zum Gestell (10) durch eine Hauptvorschubbewegung des zweiten Abschnitts (111) beweglich ist, um sich vom ersten Kammerabschnitt (110) zu entfernen oder sich daran anzunähern, um die Brühkammer (11) in eine jeweils offene oder geschlossene Konfiguration zu bringen;
- ein Stellglied (12), das angeordnet ist, um mindestens teilweise die Verschiebung des zweiten Abschnitts (111) zu steuern, wobei das Stellglied (12) einen Kniehebelmechanismus (120) umfasst, wobei der zweite Abschnitt (111) mindestens teilweise vom Stellglied (12) getragen wird; die Gruppe (1) auch eine am Gestell (10) angeordnete Einstellvorrichtung (13) umfasst, die konfiguriert ist, um den Abstand zwischen dem ersten Kammerabschnitt (110) und dem zweiten Kammerabschnitt (111) einzustellen, wenn sich die Brühkammer (11) in der geschlossenen Konfiguration befindet, **dadurch gekennzeichnet, dass** die Einstellvorrichtung (13) konfiguriert ist, um mindestens einen von dem ersten Kammerabschnitt (110) und dem zweiten Kammerabschnitt (111) im Verhältnis zum Gestell (10) zu verschieben, wobei der zweite Kammerabschnitt (111) durch die Einstellvorrichtung (13) direkt oder durch eine Verschiebung des Kniehebelmechanismus (120) durch die Einstellvorrichtung (13) verschoben wird.

2. Brühgruppe (1) nach dem vorstehenden Anspruch, wobei der Kniehebelmechanismus (120) umfasst:
- einen Hebel (1201), der vom Benutzer manuell betätigbar ist, oder von einem Getriebemotor angetrieben wird,
- ein Antriebsorgan (1200), das fest mit dem Hebel (1201) verbunden ist, wobei das Organ (1200) in Bezug auf das Gestell (10) um eine Antriebsrichtung (1202c) drehbar montiert ist,
- mindestens eine, und vorzugsweise eine einzige, Kurbelstange (1203), die in Bezug auf das Organ (1200) um eine erste Drehachse (1204) drehbar angelenkt ist, wobei die Kurbelstange (1203) weiter, vorzugsweise direkt, am zweiten beweglichen Kammerabschnitt (111) angeschlossen ist und vorzugsweise um eine zweite Drehachse (1206) drehbar angelenkt ist, wobei die Kurbelstange (1203) konfiguriert ist, um den zweiten Abschnitt (111) in einer Hauptvorschubbewegung anzutreiben,
wobei die Einstellvorrichtung (13) vorzugsweise konfiguriert ist, um das Antriebsorgan (1200) vorzugsweise in einer Richtung, die parallel zur Hauptvorschubbewegung des zweiten Abschnitts (111) zu verschieben.

3. Brühgruppe (1) nach dem vorstehenden Anspruch, wobei die Einstellvorrichtung (13) mindestens eine Einstellschraube (130) umfasst, die drehbar am Gestell (10) montiert und konfiguriert ist, um das Antriebsorgan (1200) zu verschieben, wenn die Schraube (1300) in Drehung angetrieben wird,
wobei die Schraube (130) vorzugsweise an einem von dem Antriebsorgan (1200) und einer Antriebswelle (1202) anliegt, an der das Antriebsorgan (1200) drehbar um eine Antriebsrichtung (1202c) montiert ist, um die Antriebswelle (1202) in einer Vorschubbewegung zu verschieben, deren Richtung parallel zur Hauptvorschubbewegung des zweiten Kammerabschnitts (111) verläuft, wobei mindestens ein Abschnitt (1202a) der Welle (1202) in einem Langloch (100) des Gestells (10) angeordnet ist, wobei sich das Langloch (100) parallel zur Hauptvorschubbewegung des zweiten Kammerabschnitts (111) erstreckt.

4. Brühgruppe (1) nach Anspruch 1, wobei die Einstellvorrichtung (13) konfiguriert ist, um den ersten Kammerabschnitt (110) in Bezug auf das Gestell (10) in einer Richtung zu verschieben, die parallel zur Hauptvorschubbewegung des zweiten Kammerabschnitts (111) verläuft, wobei die Einstellvorrichtung vorzugsweise mindestens eine am Gestell (10) drehbar montierte Einstellschraube (130) umfasst, die konfiguriert ist, um den ersten Kammerabschnitt (110) zu verschieben, wenn die Schraube (130) in einer Vorschubbewegung angetrieben wird, deren Richtung parallel zur Hauptvorschubbewegung des zweiten Kammerabschnitts (111) verläuft.

5. Brühgruppe (1) nach einem der vorstehenden Ansprüche, wobei der Kniehebelmechanismus (120) einen Hebel (1201) umfasst, der vom Benutzer manuell betätigbar ist oder fest mit einem Getriebemotor verbunden ist, wobei der Hebel (1201) am Ende des Hubs des Kniehebelmechanismus (120) durch mindestens einen Anschlag (1205), der am Kniehebelmechanismus (120) angeordnet ist, beim Übergang von der offenen Konfiguration zur geschlossenen Konfiguration der Brühkammer (11) gestoppt wird,
wobei der Hebel (1201) vorzugsweise fest mit einem Antriebsorgan (1200) verbunden ist, wobei das Element drehbar in Bezug auf das Gestell (10) um eine Antriebsrichtung (1202c) montiert ist, wobei das Organ (1202) weiter drehbar in Bezug auf eine Kurbelstange (1203) um eine erste Drehachse (1204) montiert ist, wobei der mindestens eine Anschlag (1205) an der Kurbelstange (1203) angeordnet ist, um auf mindestens einem Abschnitt (1201a) des Hebels (1201) aufzuliegen, wenn sich die Brühkammer (11) in geschlossener Konfiguration befindet.

6. Brühgruppe (1) nach einem der vorstehenden Ansprüche, wobei die Einstellvorrichtung (13) konfiguriert ist, um manuell oder über ein manuell betätigtes Werkzeug eingestellt zu werden.

7. Brühgruppe (1) nach einem der vorstehenden Ansprüche, wobei der erste Kammerabschnitt (110) und der zweite Kammerabschnitt (111) jeweils ein ringförmiges Relief (113) umfassen, die einander gegenüberliegend angeordnet sind, wenn sich die Brühkammer (11) in der geschlossenen Konfiguration befindet, wobei eines der ringförmigen Reliefs (113) in Projektion auf einer Ebene senkrecht zu einer Richtung parallel zur Haupttranslationsbewegung des zweiten Abschnitts (111) verläuft, eine Oberfläche (S1) aufweist, die 0,7-mal und vorzugsweise 0,1-mal kleiner ist als die Oberfläche (S2) des anderen der ringförmigen Reliefs (113).

8. Brühgruppe (1) nach einem der vorstehenden Ansprüche, wobei die Einstellvorrichtung (13) mindestens eine am Gestell (10) drehbar montierte Einstellschraube (130) umfasst, wobei die Einstellschraube (130) konfiguriert ist, um mindestens einen von dem ersten Kammerabschnitt (110) und dem zweiten Kammerabschnitt (111) zu verschieben, wenn die Schraube (1300) in Drehung angetrieben wird, und wobei das Gestell mindestens zwei Platten (100, 100) umfasst, die sich hauptsächlich in Richtungen parallel zur Hauptvorschubbewegung des zweiten Abschnitts (111) erstrecken, wobei das Gestell (10) eine allgemeine "U"-Form aufweist, deren Schenkel jeweils aus einer Platte (100, 100) gebildet sind, wobei der Kniehebelmechanismus zwischen den beiden Platten (100, 100) angeordnet ist, wobei die beiden Platten (100, 100) über mindestens ein Verbindungselement (101) miteinander verbunden sind, wobei das Verbindungselement (101) die Einstellschraube (130) trägt.

9. Brühgruppe (1) nach einem der vorstehenden Ansprüche, wobei die Gruppe (1) weiter ein Dichtungsausgleichssystem (115) umfasst, das mindestens ein elastisches Organ (1150) umfasst, das konfiguriert ist, um auf mindestens einen von dem ersten Kammerabschnitt (110) und dem zweiten Kammerabschnitt (111) eine Druckkraft auszuüben, die dazu neigt, den ersten Abschnitt (110) und den zweiten Abschnitt (111) in der geschlossenen Konfiguration der Brühkammer (11) zueinander zu spannen,
wobei das mindestens eine elastische Organ (1150) vorzugsweise konfiguriert ist, um in der offenen Konfiguration der Brühkammer (11) und in der geschlossenen Konfiguration der Brühkammer (11) elastisch zusammengedrückt zu werden, wobei das mindestens eine elastische Organ mindestens eines von einer Druckfeder und mindestens einer Druckscheibe umfasst,
wobei das mindestens eine elastische Organ, beispielsweise eine Vielzahl von Druckscheiben, vorzugsweise zwischen dem Gestell (10) und dem ersten Kammerabschnitt (110) positioniert ist.

10. Brühgruppe (1) nach einem der vorstehenden Ansprüche, wobei die Gruppe (1) weiter eine elastisch verformbare, und an mindestens einem von dem ersten Kammerabschnitt (110) und einem zweiten Kammerabschnitt (111) angeordnete Dichtvorrichtung (114) umfasst, sodass die Dichtvorrichtung (114) in Kontakt mit jedem von dem ersten (110) und dem zweiten (111) Kammerabschnitt in der geschlossenen Konfiguration der Brühkammer (11) angeordnet ist.

11. Verfahren zum Einstellen einer Brühgruppe (1) nach einem der vorstehenden Ansprüche, das mindestens die folgenden Schritte umfasst:
- Betätigen (30) des Kniehebelmechanismus (120), um die Brühkammer (11) in geschlossene Konfiguration zu bringen ;
- Betätigen (31) der Einstellvorrichtung (13), um den Abstand zwischen dem ersten Kammerabschnitt (110) und dem zweiten Kammerabschnitt (111) einzustellen, wenn sich die Brühkammer (11) in der geschlossenen Konfiguration befindet, wobei die Einstellvorrichtung (13) vorzugsweise mindestens eine am Gestell (10) drehbar montierte Einstellschraube (130) umfasst,
wobei vorzugsweise der Schritt zum Betätigen (31) der Einstellvorrichtung (13) einen Schritt zum Schrauben (310) der Schraube (130) umfasst, um mindestens einen von dem Kniehebelmechanismus (120) und dem ersten Kammerabschnitt (110) in Bezug auf das Gestell (10) zu verschieben,
wobei vorzugsweise der Betätigungsschritt (31) an der Einstellvorrichtung (13) manuell oder über ein manuell betätigtes Werkzeug durchgeführt wird.

12. Verfahren zum Herstellen einer Brühgruppe (1), das mindestens die folgenden Schritte umfasst:
- Bereitstellen einer Brühgruppe (1) nach einem der Ansprüche 1 bis 10:
- Durchführen des Verfahrens zum Einstellen der Brühgruppe (1) nach Anspruch 11.

13. Getränkezubereitungsmaschine durch Brühen aus einem in einem Packstück enthaltenen Produkt, die eine Brühgruppe (1) nach einem der Ansprüche 1 bis 10, sowie mindestens einen Kessel und eine Pumpe umfasst, wobei der Kessel und die Pumpe konfiguriert sind, um die Brühkammer mit einem erhitzten und unter Druck stehenden Fluid zu versorgen.

14. Baugruppe, die eine Getränkezubereitungsmaschine nach Anspruch 13 und mindestens ein Packstück (2) umfasst.

## Claims

1. An infusion group (1) for a beverage infusion machine from a product contained in a packaging (2), the group (1) comprising:
- a frame (10) for supporting the group (1);
- an infusion chamber (11) configured to receive the packaging (2) during the infusion, said chamber (11) being defined by at least a first chamber portion (110) and a second chamber portion (111), the second chamber portion (111) being movable relative to the frame (10) through a main translational movement of the second portion (111), so as to move away from or closer to the first chamber portion (110) in order to bring the infusion chamber (11) into an open or closed configuration, respectively;
- an actuator (12) arranged to at least partly control displacement of the second portion (111), the actuator (12) comprising a toggle mechanism (120), the second portion (111) being at least partly carried by the actuator (12); the group (1) also comprises an adjustment device (13) disposed on the frame (10), configured to adjust the distance between the first chamber portion (110) and the second chamber portion (111) when the infusion chamber (11) is in the closed configuration, **characterised in that** the adjustment device (13) is configured to displace at least one of the first chamber portion (110) and the second chamber portion (111) relative to the frame (10), the second chamber portion (111) being displaced by the adjustment device (13) either directly or through a displacement of the toggle mechanism (120) by the adjustment device (13).

2. The infusion group (1) according to the preceding claim, wherein the toggle mechanism (120) comprises:
- a lever (1201) manually actuatable by the user or driven by a motor reducer,
- a drive member (1200), integral with the lever (1201), said member (1200) being rotatably mounted relative to the frame (10) about a drive direction (1202c),
- at least one, and preferably a single, connecting rod (1203) rotatably articulated relative to said member (1200) about a first axis of rotation (1204), said connecting rod (1203) being further connected, preferably directly, to the second movable chamber portion (111), preferably by being rotatably articulated about a second axis of rotation (1206), said connecting rod (1203) being configured to drive said second portion (111) in a main translational movement,
preferably, the adjustment device (13) is configured to displace the drive member (1200), preferably along a direction parallel to the main translational movement of the second portion (111).

3. The infusion group (1) according to the preceding claim, wherein the adjustment device (13) comprises at least one adjusting screw (130) rotatably mounted to the frame (10), and configured to displace the drive member (1200) when said screw (1300) is rotatably driven,
preferably, said screw (130) is bearing against one of the drive member (1200) and a drive shaft (1202), to which the drive member (1200) is rotatably mounted about a drive direction (1202c), so as to displace the drive shaft (1202) along a translational movement whose direction is parallel to the main translational movement of the second chamber portion (111), at least one portion (1202a) of said shaft (1202) being disposed in an oblong (100) of the frame (10), said oblong (100) extending in parallel to the main translational movement of the second chamber portion (111).

4. The infusion group (1) according to claim 1, wherein the adjustment device (13) is configured to displace the first chamber portion (110) relative to the frame (10) along a direction parallel to the main translational movement of the second chamber portion (111), preferably the adjustment device comprises at least one adjusting screw (130) rotatably mounted to the frame (10), and configured to displace the first chamber portion (110) when said screw (130) is rotatably driven, in a translational movement whose direction is parallel to the main translational movement of the second chamber portion (111).

5. The infusion group (1) according to any one of the preceding claims, wherein the toggle mechanism (120) comprises a lever (1201) manually actuatable by the user or integral with a motor reducer, said lever (1201) is stopped at the end of travel of the toggle mechanism (120) by at least one stop (1205) disposed on the toggle mechanism (120), when shifting from the open configuration to the closed configuration of the infusion chamber (11), preferably, said lever (1201) is integral with a drive member (1200), said member being rotatably mounted relative to the frame (10) about a drive direction (1202c), said member (1202) being further rotatably mounted relative to a connecting rod (1203) about a first axis of rotation (1204), said at least one stop (1205) is disposed on the connecting rod (1203) so as to bear against at least one portion (1201a) of the lever (1201) when the infusion chamber (11) is in the closed configuration.

6. The infusion group (1) according to any one of the preceding claims, wherein the adjustment device (13) is configured to be adjusted either manually or through a manually actuated tool.

7. The infusion group (1) according to any one of the preceding claims, wherein the first chamber portion (110) and the second chamber portion (111) each comprise an annular relief (113) disposed opposite to each other when the infusion chamber (11) is in a closed configuration, one of the annular reliefs (113) having, in a projection onto a plane perpendicular to a direction parallel to the main translational movement of the second portion (111), a surface area (S1) that is less than 0.7 and preferably 0.1 times the surface area (S2) of the other of the annular reliefs (113).

8. The infusion group (1) according to any one of the preceding claims, wherein the adjustment device (13) comprises at least one adjusting screw (130) rotatably mounted to the frame (10), the adjusting screw (130) being configured to displace at least one of the first chamber portion (110) and the second chamber portion (111) when said screw (1300) is rotatably driven, and wherein the frame comprises at least two plates (100, 100) mainly extending along directions parallel to the main translational movement of the second portion (111), the frame (10) having a generally "U" shape, the branches of which are each formed by a plate (100, 100), the toggle mechanism being disposed between the two plates (100, 100), the two plates (100, 100) being interconnected by at least one connecting element (101), the connecting element (101) carrying the adjusting screw (130).

9. The infusion group (1) according to any one of the preceding claims, the group (1) further comprising a sealing compensation system (115) comprising at least one elastic member (1150) configured to exert on at least one of the first chamber portion (110) and the second chamber portion (111) a compressive force tending to mutually tighten the first portion (110) and the second portion (111) in the closed configuration of the infusion chamber (11)
preferably the at least one elastic member (1150) is configured to be elastically compressed in the open configuration of the infusion chamber (11) and in the closed configuration of the infusion chamber (11), the at least one elastic member comprising at least one of a compression spring and at least one compression washer,
preferably the at least one elastic member, for example a plurality of compression washers, is positioned between the frame (10) and the first chamber portion (110).

10. The infusion group (1) according to any one of the preceding claims, the group (1) further comprising an elastically deformable sealing device (114) disposed on at least one of the first chamber portion (110) and the second chamber portion (111), such that the sealing device (114) is disposed in contact with both the first (110) and second (111) chamber portions, in the closed configuration of the infusion chamber (11).

11. A method for adjusting an infusion group (1) according to any one of the preceding claims, comprising at least the following steps:
- actuating (30) the toggle mechanism (120) so as to shift the infusion chamber (11) to the closed configuration;
- acting (31) on the adjustment device (13) in order to adjust the distance between the first chamber portion (110) and the second chamber portion (111), when the infusion chamber (11) is in the closed configuration,
preferably, the adjustment device (13) comprises at least one adjusting screw (130) rotatably mounted to the frame (10), the step (31) of acting on the adjustment device (13) includes a step (310) of screwing said screw (130) so as to displace at least one of the toggle mechanism (120) and the first chamber portion (110) relative to the frame (10), preferably, the step (31) of acting on the adjustment device (13) is performed manually or through a manually actuated tool.

12. A method for manufacturing an infusion group (1), comprising at least the following steps:
- providing an infusion group (1) according to any one of claims 1 to 10:
- implementing the method for adjusting the infusion group (1) according to claim 11.

13. A machine for preparing a beverage by infusion, from a product contained in a package, comprising an infusion group (1) according to any one of claims 1 to 10, as well as at least one boiler and a pump, the boiler and pump being configured to supply the infusion chamber with a heated and pressurised fluid.

14. An assembly comprising a beverage preparation machine according to claim 13 and at least one package (2).
